# EUROPEAN PATENT SPECIFICATION

(11) **EP 4 284 171 B1**
(45) Date of publication and mention of the grant of the patent: **13.11.2024**
(21) Application number: 22703588.8
(22) Date of filing: 28.01.2022
(51) Int. Cl.: A01N 25/10, A01P 3/00, A01C 1/06, A01N 37/50, A01N 47/40, A01N 43/80, A01N 43/713, A01N 43/56, A01N 59/16

(54) **METHOD FOR TREATING RICE SEED WITH IMPROVED RETENTION OF AGROCHEMICAL, MICRONUTRIENT AND COLORANT**
VERFAHREN ZUR BEHANDLUNG VON REISSAMEN MIT VERBESSERTER RETENTION VON AGROCHEMIKALIEN, MIKRONÄHRSTOFFEN UND FARBSTOFFEN
PROCÉDÉ DE TRAITEMENT DE SEMENCE DE RIZ PRÉSENTANT UNE MEILLEURE RÉTENTION DE SUBSTANCES AGROCHIMIQUES, DE MICRONUTRIMENTS ET DE COLORANTS

(30) Priority: 28.01.2021 EP 21153954
(43) Date of publication of application: 06.12.2023
(73) Proprietor: SPECIALTY OPERATIONS FRANCE, 69003 Lyon (FR)
(72) Inventor: DE VERGNES, Bernard, 91660 Méréville (FR); OI, Masanori, Tsukuba-city Ibaraki 305-0817 (JP)
(74) Representative: Delenne, Marc
(86) International application number: PCT/EP2022/052018
(87) International publication number: WO 2022/162129

(56) References cited:
- WO-A1-2016/013506
- WO-A1-2016/013507
- WO-A1-2016/055096
- WO-A1-2016/055439

## Description

This application claims priority filed on 28 January 2021 in Europe with Nr 211539549.

The present invention relates to a method for preparing a coated rice seed wherein a seed coating is at least partially applied to the surface of dry rice seed, a coated rice seed and a method for protecting emerging seedlings of rice plants against fungal diseases and/ or pests before planting. Moreover, the present invention relates to a method for increasing the content of micronutrients in the seed by including said micronutrient in the form of its salts in the coating.

Disease preventive treatments for transplanted rice and/or for controlling animal pests are known, in which agrochemicals are sprayed, or granules applied, to rice paddies or nursery boxes. However, this use of agrochemicals over rice paddies for preventing diseases of rice and/or for controlling animal pests after transplantation to rice paddies has problems such that large amounts of agrochemicals are needed or the effect of agrochemicals does not last long. Even if the amount of agrochemicals can be reduced when spraying or applying granular agrochemicals to nursery boxes compared with that in rice paddies, in some cases the amount of agrochemicals used is still large and the durability of the effect is not sufficient. Further, Zinc is an essential micronutrient for the normal growth, development and health of plants and human beings. Currently, large areas of agricultural land are now known to be zinc deficient, causing severe reductions in crop productivity and nutritional quality of the food crops. Still in many countries, zinc deficiency is unrecognized or underestimated and untreated. There is, therefore, an urgent need to understand and address zinc deficiency in these countries in order to contribute to both crop production and human health. Zinc is also particularly important for better tolerance of crop plants under various stress factors such as drought, heat and salinity. Applying zinc fertilizers to soil and/or onto plant leaves offers a simple and highly effective solution to zinc deficiency problems in crop plants and to increasing zinc concentrations of foods. This strategy greatly prevents unnecessary loss of food production and helps improve public health. For example, enrichment of rice and wheat grain with zinc may save the lives of up to 48,000 children in India annually.

For millions of people around the world, a few extra milligrams of zinc each day can make the difference between illness or death and a healthy, productive life. By ensuring that crops have an adequate supply of zinc, we can help address this global problem by providing significant health, social and economic benefits (Zinc Fertilizer Brochure 2009, published by the International Zinc Association IFA; see also Comparative Quantification/Global and Regional Burden of Diseases Attributable to Selected Major Risk Factors of Health Risks, Ezzati, Lopez, Rodgers, Murray (eds.), Chapter 5 - Zinc Deficiency, WHO, 2004).

Zinc is essential for the normal healthy growth and reproduction of plants, animals and humans. When the supply of plant-available zinc is inadequate, crop yields and quality of crop products are impaired. In plants, zinc plays a key role as a structural constituent or regulatory co-factor of a wide range of different enzymes and proteins in many important biochemical pathways. When the supply of zinc to the plant is inadequate, the physiological functions of zinc cannot operate correctly and thus plant growth is adversely affected. This can result within the plant in visible symptoms of stress, which symptoms vary with species and which might include: stunting (reduced height), interveinal chlorosis (yellowing of the leaves between the veins), bronzing of chlorotic leaves, small and abnormally shaped leaves and/or stunting and roseting of leaves (where the leaves form a whorl on shortened stems). So-called hidden deficiencies without obvious visible symptoms might lead to a 20 % loss of plant yield. Zinc-deficient soils causing hidden deficiency may cause a significant financial loss to the farmer. Thus, it is necessary to identify zinc-deficient soils as early as possible by soil testing or crop plant analysis. Once identified, zinc-deficient soils can be easily treated with zinc fertilizers to provide an adequate supply of zinc to the crops, where zinc sulphate is by far the most widely used fertilizer (cf. Zinc in Soils and Crop Nutrition by B.J. Alloway, 2nd Ed. Brussels, Paris, 2008).

Rice seeds may be soaked and incubated before sowing. In order to protect the rice seed, pesticides, in particular fungicides, may be added to the soaking water or directly to the seed after soaking or after germination before transplantation (JP Patent Appl. Publ. No. 9224424, JP Patent Appl. Publ. No. 11028006, JP Patent Appl. Publ. No. 11049612). This strategy is however not always satisfactory, as the pesticides used may not remain on the seed in sufficient concentration and is washed off after incubation or transplantation, respectively, so that disease or pest protection is not sufficient.

When zinc is referred to in the instant invention, it is understood that not the pure metal is meant, but zinc in the form of its cation in its salts and oxides.

EP 1 078 563 B1 for example describes seed coating compositions for low temperature applications in which the seed is coated with a coating composition comprising a polymer and at least one active ingredient. These compositions may be used for rice seed for direct sowing but are however not suitable for rice seed if it is to be soaked and incubated first before sowing due to wash-off of the coating.

In WO 2016/055439 a polymer coating is described with improved retention of active ingredient in the coating. However, as has been shown, the retention of the active as well as the colorants still need improvement, since after soaking the soaking water shows significant coloration indication loss of colorant on the seed as well as possibly active ingredient. Moreover, the polymer did not show sufficient flowability / viscosity, in particular under cold conditions, thus application and coating were difficult.

Thus, the object of the present invention is to improve these demerits and to significantly reduce the amount of agrochemicals leached out of the coating compared with those used in the conventional nursery-box treatment or other polymer coating known in the art, and to offer a method for preventing diseases and/or controlling animal pests in transplanted rice, which is simple and less expensive, having a long residual effect in rice paddies. Further, the object of the invention is to improve absorption of zinc into the seeds to obtain healthier plants as well as healthier food which provides additional zinc when consumed.

Through dedicated studies to solve the above-mentioned problems, the inventors have found that by treating rice seeds with a mixture of copolymers consisting of
a copolymer of butyl acrylate and 1,4-diethenylbenzene and styrene (2-propenoic acid, butyl ester, copolymer with 1,4-diethenylbenzene and ethenyl benzene), and
a copolymer of butyl acrylate and styrene (2-propenoic acid, butyl ester, copolymer with ethenyl benzene),
and at least one agrochemical coated rice seed can be obtained which may be soaked in water and incubated without substantially wash-off of the agrochemical.

Further it was found, that, if zinc was added to the coating in form of its salts or oxides, that the content of zinc in the seed is increased.

It was also found that colorants from the agrochemicals, which is common practice in the art to mark and identify specific treated seeds and corresponding agrochemicals, show a better retention due to the improved coating according to the instant invention when soaked.

Moreover, it was found that the coating composition is stable and has a lower viscosity, in particular at low temperatures, making handling and application of the coating as well as dosage adjustment easier.

It was surprisingly found that the mixture of copolymers is sufficiently water permeable so that the soaking and incubation is not hindered so that an improvement of germination rate compared to the polymers disclosed in WO 2016/055439 is observed, while little or no reduction of germination rate compared to untreated rice seed is observed. At the same time, the mixture of copolymers are not dissolved in the soaking water and may serve for example as a matrix or substrate for the agrochemical active ingredient.

Hence, a first embodiment of the present invention is a method for preparing a coated rice seed wherein a seed coating is at least partially applied to the surface of dry rice seed, wherein the method is characterized in that the seed coating comprises a mixture of copolymers, consisting of a copolymer of butylacrylate and 1,4-diethenylbenzene and styrene, and a copolymer of butylacrylate and styrene (2-propenoic acid, butyl ester, copolymer with ethenyl benzene), and at least one agrochemical.

A second embodiment for the present invention is a method for preparing a coated rice seed wherein a seed coating is at least partially applied to the surface of dry rice seed, wherein the method is characterized in that the seed coating comprises mixture of copolymers consisting of a copolymer of butylacrylate and 1,4-diethenylbenzene and styrene, and a copolymer of butylacrylate and styrene (2-propenoic acid, butyl ester, copolymer with ethenyl benzene), at least one agrochemical, and at least one zinc salt or zinc oxide.

In a third embodiment, the above described coatings contain further a colorant as well as optionally other adjuvants suitable in coatings.

A fourth embodiment is directed to a seed coating, comprising a mixture of copolymers, consisting of a copolymer of butylacrylate and 1,4-diethenylbenzene and styrene, and a copolymer of butylacrylate and styrene (2-propenoic acid, butyl ester, copolymer with ethenyl benzene), and at least one agrochemical.

In a fifth embodiment the seed coating describe above additionally also contains a zinc salt or oxide and optionally colorants and further coating adjuvants, wherein in a preferred embodiment the colorant is mandatory.

In the present invention, the term "copolymer" is used for any polymer, which comprises two or more different monomers. In particular, polymers comprising 2 or 3 different monomers are also regarded as "copolymers" according to the present invention.

The term "dry rice seed" means rice in a form, which is suitable for storage to be used as seed later on. The rice seed may have a rest water content typical for rice seed, for example 20 wt.-% or less, in particular 15 wt.-% or less, preferably 14 wt.-% or less. The water content can be determined by typical moisture analyzers for cereals like the Pfeuffer HE50, or by titration according to the Karl-Fischer method.

The seed can be coated once or several times, whereas the coating layers may have identical or different compositions. For example, the inner coating layer may comprise copolymer mixture and at least one fungicide, whereas the next outer layer may comprise at least one insecticide, optionally with a binder, like a polymer-binder of any suitable kind or copolymer mixture described in the present invention.

According to a preferred embodiment of the present invention, the first copolymer is prepared by reacting at least the following monomers:
a) Butyl acrylate,
b) Styrene and 1,4-diethenylbenzene

These monomers may preferably be present in amounts of
45 to 65 wt.-% butyl acrylate, in particular 50 to 70 wt.-%, preferably 55 to 65 wt.-%;
35 - 55 % wt.-% styrene and 1,4-diethenylbenzene, in particular 30 to 50 wt.-%, preferably 35 to 45 wt.-%.

According to a preferred embodiment of the present invention, the second copolymer is prepared by reacting at least the following monomers:
a) Butyl acrylate, and
b) Styrene

These monomers may preferably be present in amounts of
35 to 65 wt.-% butyl acrylate, in particular 40 to 60 wt.-%, preferably 45 to 55 wt.-%;
35 - 65 % wt.-% styrene, in particular 40 to 60 wt.-%, preferably 45 to 55 wt.-%.

In an preferred embodiment the copolymers consists only of the monomers as described above.

The copolymer of butylacrylate and 1,4-diethenylbenzene and styrene refers to CAS No. 57516-68-4. The copolymer of butylacrylate and styrene refers to CAS No. 25767-47-9.

Such copolymer mixtures are advantageous, as they may effectively prevent wash-off of agrochemicals from the seed during soaking and incubation, while still being sufficiently water permeable. Furthermore, if such copolymer mixtures are used as a water-based dispersion, most agrochemicals can be added and mixed and a stable dispersion is obtained, which makes further processing, i.e. the coating of the seed, easy to handle. Finally, copolymers with the above-mentioned amounts of monomers provide tackiness at room temperature conditions, which is advantageous for fixing the coating to the seed.

In a preferred embodiment, the copolymer is free of acrylic acid.

The copolymers used for the inventive method can be prepared by any method, known to the skilled person. In particular, the copolymers can be prepared by radical emulsion polymerization, just to give an example. The emulsion may be manufactured using a standard emulsion polymerization route under pressure, which is widely used in the manufacture of copolymers, which incorporate gaseous monomers, such as ethylene. The emulsion can be prepared using a batch, semi-batch, or continuous feed batch, all three techniques are used in industry.

The copolymer used in the present invention may have a glass transition temperature Tg of- 100 to 20 °C, measured by dynamic differential scanning calorimetry according to DIN 53 765 with a heating rate of 20 K/min and a definition of Tg as midpoint temperature using the tangent method and nitrogen as inert gas, whereas Tg is in particular - 60 to 20 °C, preferably -10 °C or less, more preferably -20 °C or less. Particularly preferred is a Tg from -60 to 0 °C, -60 to -20 °C or -60 to -40 °C. This is advantageous because the copolymer stays elastic and also tacky under normal storing temperature conditions of rice seed, so that a good fixation of the coating is achieved and delamination of the coating can be avoided.

The copolymer may be applied to the seed in any form known to the skilled person, preferably in the form of a dispersion. A water-based dispersion is preferred, as no negative influence of the solvent with respect to the germination rate has to be feared. The rice seed may be dried after the coating is applied. This can be achieved at room temperature or slightly elevated temperatures, for example at 30 or 35 °C. Techniques like blowing warm air or spray drying may also be used. In an alternative embodiment the rice seed is not dried.

To obtain the desired coating thickness coating may be repeated once or several times with drying steps after each coating step, until the desired coating thickness is achieved. The additional coating layer(s) may also contain no agrochemical, so it works as a protective layer.

In one embodiment the copolymer of butylacrylate and 1,4-diethenylbenzene and styrene of the present invention may have a weight average molecular weight Mw in the range of 400,000 to 800,000 g/mol, preferably 500,000 to 700,000 g/mol, and more preferred 550,000 - 650,000 g/mol.

In one embodiment the copolymer of of butylacrylate and styrene of the present invention may have a weight average molecular weight Mw in the range of 25,000 to 125,000 g/mol, preferably 30,000 to 100,000 g/mol, and more prefered 40,000 - 80,000 g/mol.

In particular in one embodiment the copolymer of butylacrylate and 1,4-diethenylbenzene and styrene of the present invention may have a weight average molecular weight Mw in the range of 400,000 to 800,000 g/mol, preferably 500,000 to 700,000 g/mol, and more preferred 550,000 - 650,000 g/mol, and the monomers may preferably be present in amounts from 45 to 65 wt.-% butyl acrylate, in particular 50 to 70 wt.-%, preferably 55 to 65 wt.-%; and 35 - 55 % wt.-% styrene and 1,4-diethenylbenzene, in particular 30 to 50 wt.-%, preferably 35 to 45 wt.-%.

In particular in one embodiment the copolymer of butylacrylate and styrene of the present invention may have a weight average molecular weight Mw in the range of 25,000 to 125,000 g/mol, preferably 30,000 to 100,000 g/mol, and more prefered 40,000 - 80,000 g/mol, and the monomers may preferably be present in amounts of 35 to 65 wt.-% butyl acrylate, in particular 40 to 60 wt.-%, preferably 45 to 55 wt.-%; 35 - 65 % wt.-% styrene, in particular 40 to 60 wt.-%, preferably 45 to 55 wt.-%.

The weight average molecular weight Mw can be determined via gel permeation chromatography (GPC) in THF (tetrahydrofurane) as solvent and polystyrene as standard. If not otherwise indicated in the instant invention Mw was measured by this method.

The ratio of the first to the second polymer may be in the range of 3:1 to 1:3, preferably in the range of 2:1 to 1:2, more preferred in the range of 1.5:1 to 1:1.5, and most preferred 1:1.

The dispersion may for example have a solids content of 30 to 80 wt.-%, measured according to DIN EN ISO 3251, 30 mins, at 130 °C, in particular from 50 to 70 wt.-%, preferably from 55 to 65 wt.-%. When using dispersions with such solids contents, it is preferred that the dosage of the dispersion to an overall coating formulation including the agrochemical(s) is from 1 to 20 wt.-%, more preferred from 2 to 15 wt.-%, most preferred from 3 to 12 wt.-%.

In order to improve the film forming properties, it is advantageous that the dispersion has a minimum film forming temperature of >= 0 °C, measured according to DIN ISO 2115.

According to a further preferred embodiment of the present invention, the dispersion is mostly free of plasticizers and/ or non-ionic detergents, in particular mostly free of alkylphenolethoxylate. This is advantageous as the inventive copolymers may be provided as water-based dispersion without the need of adding the before mentioned additives which may cause environmental problem. This is particularly true for non-ionic detergents, especially alkylphenolethoxylate.

With regard to the present invention, any agrochemical can be used for providing the coating. So the agrochemical may be selected from the group comprising insecticides, fungicides, bactericides, virucides, miticides, molluscicides, nematicides, ovicides, repellents, rodenticides, herbicides, safeners, fertilizers, biologicals, or mixtures thereof.

The agrochemicals, or in the following also titled as "active ingredients" ("a.i.") are specified herein by their "common name", known and described, for example, in the Pesticide Manual ("The Pesticide Manual", 14th Ed., British Crop Protection Council 2006) or can be searched in the internet (e.g. http://www.alanwood.net/pesticides).

Where a compound (A) or a compound (B) can be present in tautomeric form, such a compound is understood hereinabove and herein below also to include, where applicable, corresponding tautomeric forms, even when these are not specifically mentioned in each case.
1) Inhibitors of the ergosterol biosynthesis, for example (1.001) cyproconazole, (1.002) difenoconazole, (1.003) epoxiconazole, (1.004) fenhexamid, (1.005) fenpropidin, (1.006) fenpropimorph, (1.007) fenpyrazamine, (1.008) fluquinconazole, (1.009) flutriafol, (1.010) imazalil, (1.011) imazalil sulfate, (1.012) ipconazole, (1.013) metconazole, (1.014) myclobutanil, (1.015) paclobutrazol, (1.016) prochloraz, (1.017) propiconazole, (1.018) prothioconazole, (1.019) pyrisoxazole, (1.020) spiroxamine, (1.021) tebuconazole, (1.022) tetraconazole, (1.023) triadimenol, (1.024) tridemorph, (1.025) triticonazole, (1.026) (1R,2S,5S)-5-(4-chlorobenzyl)-2-(chloromethyl)-2-methyl-1-(1H-1,2,4-triazol-1-ylmethyl)cyclopentanol, (1.027) (1S,2R,SR)-5-(4-chlorobenzyl)-2-(chloromethyl)-2-methyl-1-(1H-1,2,4-triazol-1-ylmethyl)cyclopentanol, (1.028) (2R)-2-(1-chlorocyclopropyl)-4-[(1R)-2,2-dichlorocyclopropyl]-1-(1H-1,2,4-triazol-1-yl)butan-2-ol, (1.029) (2R)-2-(1-chlorocyclopropyl)-4-[(1S)-2,2-dichlorocyclopropyl]-1-(1H-1,2,4-triazol-1-yl)butan-2-ol, (1.030) (2R)-2-[4-(4-chlorophenoay)-2-(trifluoromethyl)phenyl]-1-(1H-1,2,4-triazol-1-yl)propan-2-ol, (1.031) (2S)-2-(1-chlorocyclopropyl)-4-[(1R)-2,2-dichlorocyclopropyl]-1-(1H-1,2,4-triazol-1-yl)butan-2-ol, (1.032) (2S)-2-(1-chlorocyclopropyl)-4-[(1S)-2,2-dichlorocyclopropyl]-1-(1H-1,2,4-triazol-1-yl)butan-2-ol, (1.033) (2S)-2-[4-(4-chlorophenoay)-2-(trifluoromethyl)phenyl]-1-(1H-1,2,4-triazol-1-yl)propan-2-ol, (1.034) (R)-[3-(4-chloro-2-fluorophenyl)-5-(2,4-difluorophenyl)-1,2-oxazol-4-yl](pyridin-3-yl)methanol, (1.035) (S)-[3-(4-chloro-2-fluorophenyl)-5-(2,4-difluorophenyl)-1,2-oxazol-4-yl](pyridin-3-yl)methanol, (1.036) [3-(4-chloro-2-fluorophenyl)-5-(2,4-difluorophenyl)-1,2-oxazol-4-yl](pyridin-3-yl)methanol, (1.037) 1-({(2R,4S)-2-[2-chloro-4-(4-chlorophenoxy)phenyl]-4-methyl-1,3-dioxolan-2-yl}methyl)-1H-1,2,4-triazole, (1.038) 1-({(2S,4S)-2-[2-chloro-4-(4-chlorophenoxy)phenyl]-4-methyl-1,3-dioxolan-2-yl}methyl)-1H-1,2,4-triazole, (1.039) 1-{[3-(2-chlorophenyl)-2-(2,4-difluorophenyl)oxiran-2-yl]methyl}-1H-1,2,4-triazol-5-yl thiocyanate, (1.040) 1-{ [rel(2R,3R)-3-(2-chlorophenyl)-2-(2,4-difluorophenyl)oxiran-2-yl]methyl}-1H-1,2,4-triazol-5-yl thiocyanate, (1.041) 1-{[rel(2R,3S)-3-(2-chlorophenyl)-2-(2,4-difluorophenyl)oxiran-2-yl]methyl}-1H-1,2,4-triazol-5-yl thiocyanate, (1.042) 2-[(2R,4R,5R)-1-(2,4-dichlorophenyl)-5-hydroxy-2,6,6-trimethylheptan-4-yl]-2,4-dihydro-3H-1,2,4-triazole-3-thione, (1.043) 2-[(2R,4R,5S)-1-(2,4-dichlorophenyl)-5-hydroxy-2,6,6-trimethylheptan-4-yl]-2,4-dihydro-3H-1,2,4-triazole-3-thione, (1.044) 2-[(2R,4S,SR)-1-(2,4-dichlorophenyl)-5-hydroxy-2,6,6-trimethylheptan-4-yl]-2,4-dihydro-3H-1,2,4-triazole-3-thione, (1.045) 2-[(2R,4S,SS)-1-(2,4-dichlorophenyl)-5-hydroxy-2,6,6-trimethylheptan-4-yl]-2,4-dihydro-3H-1,2,4-triazole-3-thione, (1.046) 2-[(2S,4R,5R)-1-(2,4-dichlorophenyl)-5-hydroxy-2,6,6-trimethylheptan-4-yl]-2,4-dihydro-3H-1,2,4-triazole-3-thione, (1.047) 2-[(2S,4R,5S)-1-(2,4-dichlorophenyl)-5-hydroxy-2,6,6-trimethylheptan-4-yl]-2,4-dihydro-3H-1,2,4-triazole-3-thione, (1.048) 2-[(2S,4S,5R)-1-(2,4-dichlorophenyl)-5-hydroxy-2,6,6-trimethylheptan-4-yl]-2,4-dihydro-3H-1,2,4-triazole-3-thione, (1.049) 2-[(2S,4S,SS)-1-(2,4-dichlorophenyl)-5-hydroxy-2,6,6-trimethylheptan-4-yl]-2,4-dihydro-3H-1,2,4-triazole-3-thione, (1.050) 2-[1-(2,4-dichlorophenyl)-5-hydroxy-2,6,6-trimethylheptan-4-yl]-2,4-dihydro-3H-1,2,4-triazole-3-thione, (1.051) 2-[2-chloro-4-(2,4-dichlorophenoay)phenyl]-1-(1H-1,2,4-triazol-1-yl)propan-2-ol, (1.052) 2-[2-chloro-4-(4-chlorophenoay)phenyl]-1-(1H-1,2,4-triazol-1-yl)butan-2-ol, (1.053) 2-[4-(4-chlorophenoxy)-2-(trifluoromethyl)phenyl]-1-(1H-1,2,4-triazol-1-yl)butan-2-ol, (1.054) 2-[4-(4-chlorophenoxy)-2-(trifluoromethyl)phenyl]-1-(1H-1,2,4-triazol-1-yl)pentan-2-ol, (1.055) mefentrifluconazole, (1.056) 2-{ [3-(2-chlorophenyl)-2-(2,4-difluorophenyl)oxiran-2-yl]methyl}-2,4-dihydro-3H-1,2,4-triazole-3-thione, (1.057) 2-{[rel(2R,3R)-3-(2-chlorophenyl)-2-(2,4-difluorophenyl)oxiran-2-yl]methyl}-2,4-dihydro-3H-1,2,4-triazole-3-thione, (1.058) 2-{[rel(2R,3S)-3-(2-chlorophenyl)-2-(2,4-difluorophenyl)oxiran-2-yl]methyl}-2,4-dihydro-3H-1,2,4-triazole-3-thione, (1.059) 5-(4-chlorobenzyl)-2-(chloromethyl)-2-methyl-1-(1H-1,2,4-triazol-1-ylmethyl)cyclopentanol, (1.060) 5-(allylsulfanyl)-1-{[3-(2-chlorophenyl)-2-(2,4-difluorophenyl)oxiran-2-yl]methyl}-1H-1,2,4-triazole, (1.061) 5-(allylsulfanyl)-1-{[rel(2R,3R)-3-(2-chlorophenyl)-2-(2,4-difluorophenyl)oxiran-2-yl]methyl}-1H-1,2,4-triazole, (1.062) 5-(allylsulfanyl)-1-{[rel(2R,3S)-3-(2-chlorophenyl)-2-(2,4-difluorophenyl)oxiran-2-yl]methyl}-1H-1,2,4-triazole, (1.063) N'-(2,5-dimethyl-4-{[3-(1,1,2,2-tetrafluoroethoxy)phenyl]sulfanyl}phenyl)-N-ethyl-N-methylimidoformamide, (1.064) N'-(2,5-dimethyl-4-f[3-(2,2,2-trifluoroethoxy)phenyl]sulfanyllphenyl)-N-ethyl-N-methylimidoformamide, (1.065) N'-(2,5-dimethyl-4-{ [3-(2,2,3,3-tetrafluoropropoxy)phenyl]sulfanyl}phenyl)-N-ethyl-N-methylimidoformamide, (1.066) N'-(2,5-dimethyl-4-{ [3-(pentafluoroethoxy)phenyl]sulfanyl}phenyl)-N-ethyl-N-methylimidoformamide, (1.067) N'-(2,5-dimethyl-4-{3-[(1,1,2,2-tetrafluoroethyl)sulfanyl]phenoxy}phenyl)-N-ethyl-N-methylimidoformamide, (1.068) N'-(2,5-dimethyl-4-{3-[(2,2,2-trifluoroethyl)sulfanyl]phenoxy}phenyl)-N-ethyl-N-methylimidoformamide, (1.069) N'-(2,5-dimethyl-4-{3-[(2,2,3,3-tetrafluoropropyl)sulfanyl]phenoay}phenyl)-N-ethyl-N-methylimidoformamide, (1.070) N'-(2,5-dimethyl-4-{3-[(pentafluoroethyl)sulfanyl]phenoxy}phenyl)-N-ethyl-N-methylimidoformamide, (1.071) N'-(2,5-dimethyl-4-phenoxyphenyl)-N-ethyl-N-methylimidoformamide, (1.072) N'-(4-{ [3-(difluoromethoxy)phenyl]sulfanyl}-2,5-dimethylphenyl)-N-ethyl-N-methylimidoformamide, (1.073) N'-(4-{3-[(difluoromethyl)sulfanyl]phenoay }-2,5-dimethylphenyl)-N-ethyl-N-methylimidofortnamide, (1.074) N'-[5-bromo-6-(2,3-dihydro-1H-inden-2-yloxy)-2-methylpyridin-3-yl]-N-ethyl-N-methylimidoformamide, (1.075) N'-{4-[(4,5-dichloro-1,3-thiazol-2-yl)oxy]-2,5-dimethylphenyl}-N-ethyl-N-methylimidoformamide, (1.076) N'-{5-bromo-6-[(1R)-1-(3,5-difluorophenyl)ethoay]-2-methylpyridin-3-yl}-N-ethyl-N-methylimidoformamide, (1.077) N'-{5-bromo-6-[(1S)-1-(3,5-difluorophenyl)ethoxy]-2-methylpyridin-3-yl}-N-ethyl-N-methylimidoformamide, (1.078) N'-{ 5-bromo-6-[(cis-4-isopropylcyclohexyl)oxy]-2-methylpyridin-3-yl}-N-ethyl-N-methylimidoformamide, (1.079) N'-{5-bromo-6-[(trans-4-isopropylcyclohexyl)oxy]-2-methylpyridin-3-yl}-N-ethyl-N-methylimidoformamide, (1.080) N'-{5-bromo-6-[1-(3,5-difluorophenyl)ethoay]-2-methylpyridin-3-yl}-N-ethyl-N-methylimidoformamide, (1.081) ipfentrifluconazole, (1.082) 2-[4-(4-chlorophenoay)-2-(trifluoromethyl)phenyl]-1-(1H-1,2,4-triazol-1-yl)propan-2-ol, (1.083) 2-[6-(4-bromophenoxy)-2-(trifluoromethyl)-3-pyridyl]-1-(1,2,4-triazol-1-yl)propan-2-ol, (1.084) 2-[6-(4-chlorophenoxy)-2-(trifluoromethyl)-3-pyridyl]-1-(1,2,4-triazol-1-yl)propan-2-ol, (1.085) 3-[2-(1-chlorocyclopropyl)-3-(3-chloro-2-fluoro-phenyl)-2-hydroxy-propyl]imidazole-4-carbonitrile, (1.086) 4-[[6-[rac-(2R)-2-(2,4-difluorophenyl)-1,1-difluoro-2-hydroxy-3-(5-thioxo-4H-1,2,4-triazol-1-yl)propyl]-3-pyridyl]oxy]benzonitrile, (1.087) N-isopropyl-N'-[5-methoxy-2-methyl-4-(2,2,2-trifluoro-1-hydroay-1-phenylethyl)phenyl]-N-methylimidofortnamide, (1.088) N'-{5-bromo-2-methyl-6-[(l-propoxypropan-2-yl)oxy]pyridin-3-yl}-N-ethyl-N-methylimidoformamide, (1.089) hexaconazole, (1.090) penconazole, (1.091) fenbuconazole.
2) Inhibitors of the respiratory chain at complex I or II, for example (2.001) benzovindiflupyr, (2.002) bixafen, (2.003) boscalid, (2.004) carboxin, (2.005) fluopyram, (2.006) flutolanil, (2.007) fluxapyroxad, (2.008) furametpyr, (2.009) Isofetamid, (2.010) isopyrazam (anti-epimeric enantiomer 1R,4S,9S), (2.011) isopyrazam (anti-epimeric enantiomer 1S,4R,9R), (2.012) isopyrazam (anti-epimeric racemate 1RS,4SR,9SR), (2.013) isopyrazam (mixture of syn-epimeric racemate 1RS,4SR,9RS and anti-epimeric racemate 1RS,4SR,9SR), (2.014) isopyrazam (syn-epimeric enantiomer 1R,4S,9R), (2.015) isopyrazam (syn-epimeric enantiomer 1S,4R,9S), (2.016) isopyrazam (syn-epimeric racemate 1RS,4SR,9RS), (2.017) penflufen, (2.018) penthiopyrad, (2.019) pydiflumetofen, (2.020) Pyraziflumid, (2.021) sedaxane, (2.022) 1,3-dimethyl-N-(1,1,3-trimethyl-2,3-dihydro-1H-inden-4-yl)-1H-pyrazole-4-carboxamide, (2.023) 1,3-dimethyl-N-[(3R)-1,1,3-trimethyl-2,3-dihydro-1H-inden-4-yl]-1H-pyrazole-4-carboxamide, (2.024) 1,3-dimethyl-N-[(3S)-1,1,3-trimethyl-2,3-dihydro-1H-inden-4-yl]-1H-pyrazole-4-carboxamide, (2.025) 1-methyl-3-(trifluoromethyl)-N-[2'-(trifluoromethyl)biphenyl-2-yl]-1H-pyrazole-4-carboxamide, (2.026) 2-fluoro-6-(trifluoromethyl)-N-(1,1,3-trimethyl-2,3-dihydro-1H-inden-4-yl)benzamide, (2.027) 3-(difluoromethyl)-1-methyl-N-(1,1,3-trimethyl-2,3-dihydro-1H-inden-4-yl)-1H-pyrazole-4-carboxamide, (2.028) inpyrfluxam, (2.029) 3-(difluoromethyl)-1-methyl-N-[(3S)-1,1,3-trimethyl-2,3-dihydro-1H-inden-4-yl]-1H-pyrazole-4-carboxamide, (2.030) fluindapyr, (2.031) 3-(difluoromethyl)-N-[(3R)-7-fluoro-1,1,3-trimethyl-2,3-dihydro-1H-inden-4-yl]-1-methyl-1H-pyrazole-4-carboxamide, (2.032) 3-(difluoromethyl)-N-[(3 S)-7-fluoro-1,1,3-trimethyl-2,3-dihydro-1H-inden-4-yl]-1-methyl-1H-pyrazole-4-carboxamide, (2.033) 5,8-difluoro-N-[2-(2-fluoro-4-{[4-(trifluoromethyl)pyridin-2-yl]oxy}phenyl)ethyl]quinazolin-4-amine, (2.034) N-(2-cyclopentyl-5-fluorobenzyl)-N-cyclopropyl-3-(difluoromethyl)-5-fluoro-1-methyl-1H-pyrazole-4-carboxamide, (2.035) N-(2-tert-butyl-5-methylbenzyl)-N-cyclopropyl-3-(difluoromethyl)-5-fluoro-1-methyl-1H-pyrazole-4-carboxamide, (2.036) N-(2-tert-butylbenzyl)-N-cyclopropyl-3-(difluoromethyl)-5-fluoro-1-methyl-1H-pyrazole-4-carboxamide, (2.037) N-(5-chloro-2-ethylbenzyl)-N-cyclopropyl-3-(difluoromethyl)-5-fhioro-1-methyl-1H-pyrazole-4-carboxamide, (2.038) isoflucypram, (2.039) N-[(1R,4S)-9-(dichloromethylene)-1,2,3,4-tetrahydro-1,4-methanonaphthalen-5-yl]-3-(difluoromethyl)-1-methyl-1H-pyrazole-4-carboxamide, (2.040) N-[(1S,4R)-9-(dichloromethylene)-1,2,3,4-tetrahydro-1,4-methanonaphthalen-5-yl]-3-(difluoromethyl)-1-methyl-1H-pyrazole-4-carboxamide, (2.041) N-[1-(2,4-dichlorophenyl)-1-methoxypropan-2-yl]-3-(difluoromethyl)-1-methyl-1H-pyrazole-4-carboxamide, (2.042) N-[2-chloro-6-(trifluoromethyl)benzyl]-N-cyclopropyl-3-(difluoromethyl)-5-fluoro-1-methyl-1H-pyrazole-4-carboxamide, (2.043) N-[3-chloro-2-fluoro-6-(trifluoromethyl)benzyl]-N-cyclopropyl-3-(difluoromethyl)-5-fluoro-1-methyl-1H-pyrazole-4-carboxamide, (2.044) N-[5-chloro-2-(trifluoromethyl)benzyl]-N-cyclopropyl-3-(difluoromethyl)-5-fluoro-1-methyl-1H-pyrazole-4-carboxamide, (2.045) N-cyclopropyl-3-(difluoromethyl)-5-fluoro-1-methyl-N-[5-methyl-2-(trifluoromethyl)benzyl]-1H-pyrazole-4-carboxamide, (2.046) N-cyclopropyl-3-(difluoromethyl)-5-fluoro-N-(2-fluoro-6-isopropylbenzyl)-1-methyl-1H-pyrazole-4-carboxamide, (2.047) N-cyclopropyl-3-(difluoromethyl)-5-fluoro-N-(2-isopropyl-5-methylbenzyl)-1-methyl-1H-pyrazole-4-carboxamide, (2.048) N-cyclopropyl-3-(difluoromethyl)-5-fluoro-N-(2-isopropylbenzyl)-1-methyl-1H-pyrazole-4-carbothioamide, (2.049) N-cyclopropyl-3-(difluoromethyl)-5 -fluoro-N-(2-isopropylbenzyl)-1-methyl-1H-pyrazole-4-carboxamide, (2.050) N-cyclopropyl-3-(difluoromethyl)-5-fluoro-N-(5-fluoro-2-isopropylbenzyl)-1-methyl-1H-pyrazole-4-carboxamide, (2.051) N-cyclopropyl-3-(difluoromethyl)-N-(2-ethyl-4,5-dimethylbenzyl)-5-fluoro-1-methyl-1H-pyrazole-4-carboxamide, (2.052) N-cyclopropyl-3-(difluoromethyl)-N-(2-ethyl-5-fluorobenzyl)-5-fluoro-1-methyl-1H-pyrazole-4-carboxamide, (2.053) N-cyclopropyl-3-(difluoromethyl)-N-(2-ethyl-5-methylbenzyl)-5-fluoro-1-methyl-1H-pyrazole-4-carboxamide, (2.054) N-cyclopropyl-N-(2-cyclopropyl-5-fluorobenzyl)-3-(difluoromethyl)-5-fluoro-1-methyl-1H-pyrazole-4-carboxamide, (2.055) N-cyclopropyl-N-(2-cyclopropyl-5-methylbenzyl)-3-(difluoromethyl)-5-fluoro-1-methyl-1H-pyrazole-4-carboxamide, (2.056) N-cyclopropyl-N-(2-cyclopropylbenzyl)-3-(difluoromethyl)-5-fluoro-1-methyl-1H-pyrazole-4-carboxamide, (2.057) pyrapropoyne, (2.058) N-[rac-(1S,2S)-2-(2,4-dichlorophenyl)cyclobutyl]-2-(trifluoromethyl)nicotinamide, (2.059) N-[(1S,2S)-2-(2,4-dichlorophenyl)cyclobutyl]-2-(trifluoromethyl)nicotinamide.
3) Inhibitors of the respiratory chain at complex III, for example (3.001) ametoctradin, (3.002) amisulbrom, (3.003) azoxystrobin, (3.004) coumethoxystrobin, (3.005) coumoxystrobin, (3.006) cyazofamid, (3.007) dimoxystrobin, (3.008) enoxastrobin, (3.009) famoxadone, (3.010) fenamidone, (3.011) flufenoxystrobin, (3.012) fluoxastrobin, (3.013) kresoxim-methyl, (3.014) metominostrobin, (3.015) orysastrobin, (3.016) picoxystrobin, (3.017) pyraclostrobin, (3.018) pyrametostrobin, (3.019) pyraoxystrobin, (3.020) trifloxystrobin, (3.021) (2E)-2-{2-[({[(1E)-1-(3-{[(E)-1-fluoro-2-phenylvinyl]oxy}phenyl)ethylidene]amino}oxy)methyl]phenyl}-2-(methoxyimino)-N-methylacetamide, (3.022) (2E,3Z)-5-{ [1-(4-chlorophenyl)-1H-pyrazol-3-yl]oxy}-2-(methoxyimino)-N,3-dimethylpent-3-enamide, (3.023) (2R)-2-{2-[(2,5-dimethylphenoxy)methyl]phenyl}-2-methoxy-N-methylacetamide, (3.024) (2S)-2-{2- [(2,5-dimethylphenoxy)methyl]phenyl}-2-methoxy-N-methylacetamide, (3.025) fenpicoxamid, (3.026) mandestrobin, (3.027) N-(3-ethyl-3,5,5-trimethylcyclohexyl)-3-formamido-2-hydroxybenzamide, (3.028) (2E,3Z)-5-{[1-(4-chloro-2-fluorophenyl)-1H-pyrazol-3-yl]oxy}-2-(methoxyimino)-N,3-dimethylpent-3-enamide, (3.029) methyl {5-[3-(2,4-dimethylphenyl)-1H-pyrazol-1-yl]-2-methylbenzyl}carbamate, (3.030) metyltetraprole, (3.031) florylpicoxamid.
4) Inhibitors of the mitosis and cell division, for example (4.001) carbendazim, (4.002) diethofencarb, (4.003) ethaboxam, (4.004) fluopicolide, (4.005) pencycuron, (4.006) thiabendazole, (4.007) thiophanate-methyl, (4.008) zoxamide, (4.009) pyridachlometyl, (4.010) 3-chloro-5-(4-chlorophenyl)-4-(2,6-difluorophenyl)-6-methylpyridazine, (4.011) 3-chloro-5-(6-chloropyridin-3-yl)-6-methyl-4-(2,4,6-trifluorophenyl)pyridazine, (4.012) 4-(2-bromo-4-fluorophenyl)-N-(2,6-difluorophenyl)-1,3-dimethyl-1H-pyrazol-5-amine, (4.013) 4-(2-bromo-4-fluorophenyl)-N-(2-bromo-6-fluorophenyl)-1,3-dimethyl-1H-pyrazol-5-amine, (4.014) 4-(2-bromo-4-fluorophenyl)-N-(2-bromophenyl)-1,3-dimethyl-1H-pyrazol-5-amine, (4.015) 4-(2-bromo-4-fluorophenyl)-N-(2-chloro-6-fluorophenyl)-1,3-dimethyl-1H-pyrazol-5-amine, (4.016) 4-(2-bromo-4-fluorophenyl)-N-(2-chlorophenyl)-1,3-dimethyl-1H-pyrazol-5-amine, (4.017) 4-(2-bromo-4-fluorophenyl)-N-(2-fluorophenyl)-1,3-dimethyl-1H-pyrazol-5-amine, (4.018) 4-(2-chloro-4-fluorophenyl)-N-(2,6-difluorophenyl)-1,3-dimethyl-1H-pyrazol-5-amine, (4.019) 4-(2-chloro-4-fluorophenyl)-N-(2-chloro-6-fluorophenyl)-1,3-dimethyl-1H-pyrazol-5-amine, (4.020) 4-(2-chloro-4-fluorophenyl)-N-(2-chlorophenyl)-1,3-dimethyl-1H-pyrazol-5-amine, (4.021) 4-(2-chloro-4-fluorophenyl)-N-(2-fluorophenyl)-1,3-dimethyl-1H-pyrazol-5-amine, (4.022) 4-(4-chlorophenyl)-5-(2,6-difluorophenyl)-3,6-dimethylpyridazine, (4.023) N-(2-bromo-6-fluorophenyl)-4-(2-chloro-4-fluorophenyl)-1,3-dimethyl-1H-pyrazol-5-amine, (4.024) N-(2-bromophenyl)-4-(2-chloro-4-fluorophenyl)-1,3-dimethyl-1H-pyrazol-5-amine, (4.025) N-(4-chloro-2,6-difluorophenyl)-4-(2-chloro-4-fluorophenyl)-1,3-dimethyl-1H-pyrazol-5-amine, (4.026) fluopimomide.
5) Compounds capable to have a multisite action, for example (5.001) bordeaux mixture, (5.002) captafol, (5.003) captan, (5.004) chlorothalonil, (5.005) copper hydroxide, (5.006) copper naphthenate, (5.007) copper oxide, (5.008) copper oxychloride, (5.009) copper(2+) sulfate, (5.010) dithianon, (5.011) dodine, (5.012) folpet, (5.013) mancozeb, (5.014) maneb, (5.015) metiram, (5.016) metiram zinc, (5.017) oxine-copper, (5.018) propineb, (5.019) sulfur and sulfur preparations including calcium polysulfide, (5.020) thiram, (5.021) zineb, (5.022) ziram, (5.023) 6-ethyl-5,7-dioxo-6,7-dihydro-5H-pyrrolo[3',4':5,6][1,4]dithiino[2,3-c] [1,2]thiazole-3-carbonitrile.
6) Compounds capable to induce a host defence, for example (6.001) acibenzolar-S-methyl, (6.002) isotianil, (6.003) probenazole, (6.004) tiadinil.
7) Inhibitors of the amino acid and/or protein biosynthesis, for example (7.001) cyprodinil, (7.002) kasugamycin, (7.003) kasugamycin hydrochloride hydrate, (7.004) oxytetracycline, (7.005) pyrimethanil, (7.006) 3-(5-fluoro-3,3,4,4-tetramethyl-3,4-dihydroisoquinolin-1-yl)quinoline.
8) Inhibitors of the ATP production, for example (8.001) silthiofam.
9) Inhibitors of the cell wall synthesis, for example (9.001) benthiavalicarb, (9.002) dimethomorph, (9.003) flumorph, (9.004) iprovalicarb, (9.005) mandipropamid, (9.006) pyrimorph, (9.007) valifenalate, (9.008) (2E)-3-(4-tert-butylphenyl)-3-(2-chloropyridin-4-yl)-1-(morpholin-4-yl)prop-2-en-1-one, (9.009) (2Z)-3-(4-tert-butylphenyl)-3-(2-chloropyridin-4-yl)-1-(morpholin-4-yl)prop-2-en-1-one.
10) Inhibitors of the lipid and membrane synthesis, for example (10.001) propamocarb, (10.002) propamocarb hydrochloride, (10.003) tolclofos-methyl.
11) Inhibitors of the melanin biosynthesis, for example (11.001) tricyclazole, (11.002) tolprocarb.
12) Inhibitors of the nucleic acid synthesis, for example (12.001) benalaxyl, (12.002) benalaxyl-M (kiral-axyl), (12.003) metalaxyl, (12.004) metalaxyl-M (mefenoxam).
13) Inhibitors of the signal transduction, for example (13.001) fludioxonil, (13.002) iprodione, (13.003) procymidone, (13.004) proquinazid, (13.005) quinoxyfen, (13.006) vinclozolin.
14) Compounds capable to act as an uncoupler, for example (14.001) fluazinam, (14.002) meptyldinocap.
15) Further fungicides selected from the group consisting of (15.001) abscisic acid, (15.002) benthiazole, (15.003) bethoxazin, (15.004) capsimycin, (15.005) carvone, (15.006) chinomethionat, (15.007) cufraneb, (15.008) cyflufenamid, (15.009) cymoxanil, (15.010) cyprosulfamide, (15.011) flutianil, (15.012) fosetyl-aluminium, (15.013) fosetyl-calcium, (15.014) fosetyl-sodium, (15.015) methyl isothiocyanate, (15.016) metrafenone, (15.017) mildiomycin, (15.018) natamycin, (15.019) nickel dimethyldithiocarbamate, (15.020) nitrothal-isopropyl, (15.021) oxamocarb, (15.022) oxathiapiprolin, (15.023) oxyfenthiin, (15.024) pentachlorophenol and salts, (15.025) phosphorous acid and its salts, (15.026) propamocarb-fosetylate, (15.027) pyriofenone (chlazafenone), (15.028) tebufloquin, (15.029) tecloftalam, (15.030) tolnifanide, (15.031) 1-(4-{4-[(SR)-5-(2,6-difluorophenyl)-4,5-dihydro-1,2-oxazol-3-yl]-1,3-thiazol-2-yl}piperidin-1-yl)-2-[5-methyl-3-(trifluoromethyl)-1H-pyrazol-1-yl]ethanone, (15.032) 1-(4-{4-[(5S)-5-(2,6-difluorophenyl)-4,5-dihydro-1,2-oxazol-3-yl]-1,3-thiazol-2-yl}piperidin-1-yl)-2-[5-methyl-3-(trifluoromethyl)-1H-pyrazol-1-yl]ethanone, (15.033) 2-(6-benzylpyridin-2-yl)quinazoline, (15.034) dipymetitrone, (15.035) 2-[3,5-bis(difluoromethyl)-1H-pyrazol-1-yl]-1-[4-(4-{5-[2-(prop-2-yn-1-yloxy)phenyl]-4,5-dihydro-1,2-oxazol-3-yll-1,3-thiazol-2-yl)piperidin-1-yl]ethanone, (15.036) 2-[3,5-bis(difluoromethyl)-1H-pyrazol-1-yl]-1-[4-(4-{5-[2-chloro-6-(prop-2-yn-1-yloay)phenyl]-4,5-dihydro-1,2-oxazol-3-yl}-1,3-thiazol-2-yl)piperidin-1-yl]ethanone, (15.037) 2-[3,5-bis(difluoromethyl)-1H-pyrazol-1-yl]-1-[4-(4-{5-[2-fluoro-6-(prop-2-yn-1-yloay)phenyl]-4,5-dihydro-1,2-oxazol-3-yl}-1,3-thiazol-2-yl)piperidin-1-yl]ethanone, (15.038) 2-[6-(3-fluoro-4-methoxyphenyl)-5-methylpyridin-2-yl]quinazoline, (15.039) 2-{(SR)-3-[2-(1-{[3,5-bis(difluoromethyl)-1H-pyrazol-1-yl]acetyl}piperidin-4-yl)-1,3-thiazol-4-yl]-4,5-dihydro-1,2-oxazol-5-yl}-3-chlorophenyl methanesulfonate, (15.040) 2-{(5S)-3-[2-(1-{[3,5-bis(difluoromethyl)-1H-pyrazol-1-yl]acetyl}piperidin-4-yl)-1,3-thiazol-4-yl]-4,5-dihydro-1,2-oxazol-5-yl}-3-chlorophenyl methanesulfonate, (15.041) ipflufenoquin, (15.042) 2-{2-fluoro-6-[(8-fluoro-2-methylquinolin-3-yl)oxy]phenyl}propan-2-ol, (15.043) fluoxapiprolin, (15.044) 2-{3-[2-(1-{[3,5-bis(difluoromethyl)-1H-pyrazol-1-yl]acetyl}piperidin-4-yl)-1,3-thiazol-4-yl]-4,5-dihydro-1,2-oxazol-5-yl}phenyl methanesulfonate, (15.045) 2-phenylphenol and salts, (15.046) 3-(4,4,5-trifluoro-3,3-dimethyl-3,4-dihydroisoquinolin-1-yl)quinoline, (15.047) quinofumelin, (15.048) 4-amino-5-fluoropyrimidin-2-ol (tautomeric form: 4-amino-5-fluoropyrimidin-2(1H)-one), (15.049) 4-oxo-4-[(2-phenylethyl)amino]butanoic acid, (15.050) 5-amino-1,3,4-thiadiazole-2-thiol, (15.051) 5-chloro-N'-phenyl-N'-(prop-2-yn-1-yl)thiophene-2-sulfonohydrazide, (15.052) 5-fluoro-2-[(4-fluorobenzyl)oxy]pyrimidin-4-amine, (15.053) 5-fluoro-2-[(4-methylbenzyl)oxy]pyrimidin-4-amine, (15.054) 9-fluoro-2,2-dimethyl-5-(quinolin-3-yl)-2,3-dihydro-1,4-benzoxazepine, (15.055) but-3-yn-1-yl {6-[({[(Z)-(1-methyl-1H-tetrazol-5-yl)(phenyl)methylene]amino}oxy)methyl]pyridin-2-yl}carbamate, (15.056) ethyl (2Z)-3-amino-2-cyano-3-phenylacrylate, (15.057) phenazine-1-carboxylic acid, (15.058) propyl 3,4,5-trihydroxybenzoate, (15.059) quinolin-8-ol, (15.060) quinolin-8-ol sulfate (2:1), (15.061) tert-butyl {6-[({[(1-methyl-1H-tetrazol-5-yl)(phenyl)methylene]amino}oxy)methyl]pyridin-2-yl}carbamate, (15.062) 5-fluoro-4-imino-3-methyl-1-[(4-methylphenyl)sulfonyl]-3,4-dihydropyrimidin-2(1H)-one, (15.063) aminopyrifen, (15.064) (N'-[2-chloro-4-(2-fluorophenoxy)-5-methylphenyl]-N-ethyl-N-methylimidoformamide), (15.065) (N'-(2-chloro-5-methyl-4-phenoxyphenyl)-N-ethyl-N-methylimidoformamide), (15.066) (2-{2-[(7,8-difluoro-2-methylquinolin-3-yl)oxy]-6-fluorophenyl}propan-2-ol), (15.067) (5-bromo-1-(5,6-dimethylpyridin-3-yl)-3,3-dimethyl-3,4-dihydroisoquinoline), (15.068) (3-(4,4-difluoro-5,5-dimethyl-4,5-dihydrothieno[2,3-c]pyridin-7-yl)quinoline), (15.069) (1-(4,5-dimethyl-1H-benzimidazol-1-yl)-4,4-difluoro-3,3-dimethyl-3,4-dihydroisoquinoline), (15.070) 8-fluoro-3-(5-fluoro-3,3-dimethyl-3,4-dihydroisoquinolin-1-yl)quinolone, (15.071) 8-fluoro-3-(5-fluoro-3,3,4,4-tetramethyl-3,4-dihydroisoquinolin-1-yl)quinolone, (15.072) 3-(4,4-difluoro-3,3-dimethyl-3,4-dihydroisoquinolin-1-yl)-8-fluoroquinoline, (15.073) (N-methyl-N-phenyl-4-[5-(trifluoromethyl)-1,2,4-oxadiazol-3-yl]benzamide), (15.074) methyl {4-[5-(trifluoromethyl)-1,2,4-oxadiazol-3-yl]phenyl}carbamate, (15.075) (N-{4-[5-(trifluoromethyl)-1,2,4-oxadiazol-3-yl]benzyl}cyclopropanecarboxamide), (15.076) N-methyl-4-(5-(trifluoromethyl)-1,2,4-oxadiazol-3-yl]benzamide, (15.077) N-[(E)-methoxyiminomethyl]-4-[5-(trifluoromethyl)-1,2,4-oxadiazol-3-yl]benzamide, (15.078) N-[(Z)-methoxyiminomethyl]-4-[5-(trifluoromethyl)-1,2,4-oxadiazol-3-yl]benzamide, (15.079) N-[4-[5-(trifluoromethyl)-1,2,4-oxadiazol-3-yl]phenyl]cyclopropanecarboxamide, (15.080) N-(2-fluorophenyl)-4-[5-(trifluoromethyl)-1,2,4-oxadiazol-3-yl]benzamide, (15.081) 2,2-difluoro-N-methyl-2-[4-[5-(trifluoromethyl)-1,2,4-oxadiazol-3-yl]phenyl]acetamide, (15.082) N-allyl-N-[[4-[5-(trifluoromethyl)-1,2,4-oxadiazol-3-yl)phenyl]methyl]acetamide, (15.083) N-[(E)-N-methoxy-C-methyl-carbonimidoyl]-4-(5-(trifluoromethyl)-1,2,4-oxadiazol-3-yl]benzamide, (15.084) N-[(Z)-N-methoxy-C-methyl-carbonimidoyl]-4-[5-(trifluoromethyl)-1,2,4-oxadiazol-3-yl]benzamide, (15.085) N-allyl-N-[[4-[5-(trifluoromethyl)-1,2,4-oxadiazol-3-yl]phenyl]methyl]propanamide, (15.086) 4,4-dimethyl-1-[[4-[5-(trifluoromethyl)-1,2,4-oxadiazol-3-yl]phenyl]methyl]pyrrolidin-2-one, (15.087) N-methyl-4-[5-(trifluoromethyl)-1,2,4-oxadiazol-3-yl]benzenecarbothioamide, (15.088) 5-methyl-1-[[4-[5-(trifluoromethyl)-1,2,4-oxadiazol-3-yl]phenyl]methyl]pyrrolidin-2-one, (15.089) N-((2,3-difluoro-4-[5-(trifluoromethyl)-1,2,4-oxadiazol-3-yl]phenyl]methyl]-3,3,3-trifluoro-propanamide, (15.090) 1-methoxy-1-methyl-3-[[4-[5-(trifluoromethyl}-1,2,4-oxadiazol-3-yl]phenyl]methyl]urea, (15.091) 1,1-diethyl-3-[[4-[5-(trifluoromethyl}-1,2,4-oxadiazol-3-yl]phenyl]methyl]urea, (15.092) N-[[4-[5-(trifluoromethyl)-1,2,4-oxadiazol-3-yl]phenyl]methyl]propanamide, (15.093) N-methoxy-N-[[4-[5-(trifluoromethyl)-1,2,4-oxadiazol-3-yl]phenyl]methyl]cyclopropanecarboxamide, (15.094) 1-methoxy-3-methyl-1-[[4-[5-(trifluoromethyl)-1,2,4-oxadiazol-3-yl]phenyl]methyl]urea, (15.095) N-methoxy-N-[[4-[5-(trifluoromethyl)-1,2,4-oxadiazol-3-yl]phenyl]methyl)cyclopropanecarboxamide, (15.096) N,2-dimethoxy-N-[[4-[5-(trifluoromethyl}-1,2,4-oxadiazol-3-yl]phenyl]methyl]propanamide, (15.097) N-ethyl-2-methyl-N-[[4-[5-(trifluoromethyl)-1,2,4-oxadiazol-3-yl)phenyl]methyl]propanamide, (15.098) 1-methoxy-3-methyl-1-[[4-[5-(trifluoromethyl)-1,2,4-oxadiazol-3-yl]phenyl]methyl]urea, (15.099) 1,3-dimethoxy-1-[[4-[5-(trifluoromethyl)-1,2,4-oxadiazol-3-yl]phenyl]methyl]urea, (15.100) 3-ethyl-1-methoxy-1-[[4-[5-(trifluoromethyl)-1,2,4-oxadiazol-3-yl]phenyl]methyl]urea, (15.101) 1-[[4-[5-(trifluoromethyl)-1,2,4-oxadiazol-3-yl]phenyl]methyl]piperidin-2-one, (15.102) 4,4-dimethyl-2-[[4-[5-(trifluoromethyl)-1,2,4-oxadiazol-3-yl]phenyl]methyl]isooxazolidin-3-one, (15.103) 5,5-dimethyl-2-[[4-[5-(trifluoromethyl)-1,2,4-oxadiazol-3-yl]phenyl]methyl]isoxazolidin-3-one, (15.104) 3,3-dimethyl-1-[[4-[5-(trifluoromethyl)-1,2,4-oxadiazol-3-yl]-phenyl]methyl]piperidin-2-one, (15.105) 1-[[3-fluoro-4-(5-(trifluoromethyl)-1,2,4-oxadiazol-3-yl]phenyl]methyl]azepan-2-one, (15.106) 4,4-dimethyl-2-[[4-(5-(trifluoromethyl)-1,2,4-oxadiazol-3-yl]phenyl]methyl]isoxazolidin-3-one, (15.107) 5,5-dimethyl-2-[[4-[5-(trifluoromethyl)-1,2,4-oxadiazol-3-yl]-phenyl]methyl]isoxazolidin-3-one, (15.108) ethyl 1-{4-[5-(trifluoromethyl)-1,2,4-oxadiazol-3-yl]benzyl}-1H-pyrazole-4-carboxylate, (15.109) N,N-dimethyl-1- f 4-[5-(trifluoromethyl)-1,2,4-oxadiazol-3-yl]benzyl}-1H-1,2,4-triazol-3-amine, (15.110) N-{2,3-difluoro-4-[5-(trifluoromethyl)-1,2,4-oxadiazol-3-yl]benzyl}butanamide, (15.111) N-(1-methylcyclopropyl)-4-[5-(trifluoromethyl)-1,2,4-oxadiazol-3-yl]benzamide, (15.112) N-(2,4-difluorophenyl)-4-[5-(trifluoromethyl)-1,2,4-oxadiazol-3-yl]benzamide, (15.113) 1-(5,6-dimethylpyridin-3-yl)-4,4-difluoro-3,3-dimethyl-3,4-dihydroisoquinoline, (15.114) 1-(6-(difluoromethyl)-5-methyl-pyridin-3-yl)-4,4-difluoro-3,3-dimethyl-3,4-dihydroisoquinoline, (15.115) 1-(5-(fluoromethyl)-6-methyl-pyridin-3-yl)-4,4-difluoro-3,3-dimethyl-3,4-dihydroisoquinoline, (15.116) 1-(6-(difluoromethyl)-5-methoxy-pyridin-3-yl)-4,4-difluoro-3,3-dimethyl-3,4-dihydroisoquinoline, (15.117) 4-[5-(trifluoromethyl)-1,2,4-oxadiazol-3-yl]phenyl dimethylcarbamate, (15.118) N- f 4-[5-(trifluoromethyl)-1,2,4-oxadiazol-3-yl]phenyl}propanamide, (15.119) 3-[2-(1-{[5-methyl-3-(trifluoromethyl)-1H-pyrazol-1-yl]acetyl}piperidin-4-yl)-1,3-thiazol-4-yl]-1,5-dihydro-2,4-benzodioxepin-6-yl methanesulfonate, (15.120) 9-fluoro-3-[2-(1-{[5-methyl-3-(trifluoromethyl)-1H-pyrazol-1-yl]acetyl}piperidin-4-yl)-1,3-thiazol-4-yl]-1,5-dihydro-2,4-benzodioxepin-6-yl methanesulfonate, (15.121) 3-[2-(1-{[3,5-bis(difluoromethyl)-1H-pyrazol-1-yl]acetyl}piperidin-4-yl)-1,3-thiazol-4-yl]-1,5-dihydro-2,4-benzodioxepin-6-yl methanesulfonate, (15.122) 3-[2-(1-{[3,5-bis(difluoromethyl)-1H-pyrazol-1-yl]acetyl}piperidin-4-yl)-1,3-thiazol-4-yl]-9-fluoro-1,5-dihydro-2,4-benzodioxepin-6-yl methanesulfonate, (15.123) 1-(6,7-dimethylpyrazolo[1,5-a]pyridin-3-yl)-4,4-difluoro-3,3-dimethyl-3,4-dihydroisoquinoline, (15.124) 8-fluoro-N-(4,4,4-trifluoro-2-methyl-1-phenylbutan-2-yl)quinoline-3-carboxamide, (15.125) 8-fluoro-N-[(2S)-4,4,4-trifluoro-2-methyl-1-phenylbutan-2-yl]quinoline-3-carboxamide, (15.126) N-(2,4-dimethyl-1-phenylpentan-2-yl)-8-fluoroquinoline-3-carboxamide and (15.127) N-[(2S)-2,4-dimethyl-1-phenylpentan-2-yl]-8-fluoroquinoline-3-carboxamide.

All named mixing partners of the classes (1) to (15) can, if their functional groups enable this, optionally form salts with suitable bases or acids, in particular in the form of biologically acceptable salts such as sodium, potassium, ammonium and the like.

Regarding insecticides, acaricides and nematicides, the following substances may be used:
1) Acetylcholinesterase (AChE) inhibitors, for example carbamates, e.g. Alanycarb, Aldicarb, Bendiocarb, Benfuracarb, Butocarboxim, Butoxycarboxim, Carbaryl, Carbofuran, Carbosulfan, Ethiofencarb, Fenobucarb, Formetanate, Furathiocarb, Isoprocarb, Methiocarb, Methomyl, Metolcarb, Oxamyl, Pirimicarb, Propoxur, Thiodicarb, Thiofanox, Triazamate, Trimethacarb, XMC and Xylylcarb or organophosphates, e.g. Acephate, Azamethiphos, Azinphos-ethyl, Azinphos-methyl, Cadusafos, Chlorethoxyfos, Chlorfenvinphos, Chlormephos, Chlorpyrifos, Chlorpyrifos-methyl, Coumaphos, Cyanophos, Demeton-S-methyl, Diazinon, Dichlorvos/DDVP, Dicrotophos, Dimethoate, Dimethylvinphos, Disulfoton, EPN, Ethion, Ethoprophos, Famphur, Fenamiphos, Fenitrothion, Fenthion, Fosthiazate, Heptenophos, Imicyafos, Isofenphos, Isopropyl O-(methoxyaminothio-phosphoryl)salicylate, Isoxathion, Malathion, Mecarbam, Methamidophos, Methidathion, Mevinphos, Monocrotophos, Naled, Omethoate, Oxydemeton-methyl, Parathion, Parathion-methyl, Phenthoate, Phorate, Phosalone, Phosmet, Phosphamidon, Phoxim, Pirimiphos-methyl, Profenofos, Propetamphos, Prothiofos, Pyraclofos, Pyridaphenthion, Quinalphos, Sulfotep, Tebupirimfos, Temephos, Terbufos, Tetrachlorvinphos, Thiometon, Triazophos, Trichlorfon and Vamidothion.
2) GABA-gated chloride channel antagonists, for example cyclodiene organochlorines, e.g. Chlordane and Endosulfan or phenylpyrazoles (fiproles), e.g. (16.1) Ethiprole and (16.2) Fipronil.
3) Sodium channel modulators / voltage-dependent sodium channel blockers, for example pyrethroids, e.g. Acrinathrin, Allethrin, d-cis-trans Allethrin, d-trans Allethrin, Bifenthrin, Bioallethrin, Bioallethrin S-cyclopentenyl isomer, Bioresmethrin, Cycloprothrin, Cyfluthrin, beta-Cyfluthrin, Cyhalothrin, lambda-Cyhalothrin, gamma-Cyhalothrin, Cypermethrin, alpha-Cypermethrin, beta-Cypermethrin, theta-Cypermethrin, zeta-Cypermethrin, Cyphenothrin [(1R)-trans isomers], Deltamethrin, Empenthrin [(EZ)-(1R) isomers), Esfenvalerate, Etofenprox, Fenpropathrin, Fenvalerate, Flucythrinate, Flumethrin, tau-Fluvalinate, Halfenprox, Imiprothrin, Kadethrin, Permethrin, Phenothrin [(1R)-trans isomer), Prallethrin, Pyrethrine (pyrethrum), Resmethrin, Silafluofen, Tefluthrin, Tetramethrin, Tetramethrin [(1R) isomers)], Tralomethrin and Transfluthrin or DDT or Methoxychlor.
4) Nicotinic acetylcholine receptor (nAChR) agonists, for example neonicotinoids, e.g. (17.1) Acetamiprid, (17.2) Clothianidin, (17.3) Dinotefuran, (17.4) Imidacloprid, (17.5) Nitenpyram, (17.6) Thiacloprid and (17.7) Thiamethoxam or (17.8) Nicotine or (17.9) Sulfoxaflor.
5) Nicotinic acetylcholine receptor (nAChR) allosteric activators, for example spinosyns, e.g. (18.1) Spinetoram and (18.2) Spinosad.
6) Chloride channel activators, for example avermectins/milbemycins, e.g. Abamectin, Emamectin benzoate, Lepimectin and Milbemectin.
7) Juvenile hormone mimics, for example juvenile hormon analogues, e.g. Hydroprene, Kinoprene and Methoprene or Fenoxycarb or Pyriproxyfen.
8) Miscellaneous non-specific (multi-site) inhibitors, for example alkyl halides, e.g. Methyl bromide and other alkyl halides; or Chloropicrin or Sulfuryl fluoride or Borax or Tartar emetic.
9) Selective homopteran feeding blockers, e.g. Pymetrozine or Flonicamid.
10) Mite growth inhibitors, e.g. Clofentezine, Hexythiazox and Diflovidazin or Etoxazole.
11) Microbial disruptors of insect midgut membranes, e.g. Bacillus thuringiensis subspecies israelensis, Bacillus sphaericus, Bacillus thuringiensis subspecies aizawai, Bacillus thuringiensis subspecies kurstaki, Bacillus thuringiensis subspecies tenebrionis and BT crop proteins: Cry1Ab, Cry 1 Ac, Cry1Fa, Cry2Ab, mCry3A, Cry3Ab, Cry3Bb, Cry34/35Ab1.
12) Inhibitors of mitochondrial ATP synthase, for example Diafenthiuron or organotin miticides, e.g. Azocyclotin, Cyhexatin and Fenbutatin oxide or Propargite or Tetradifon.
13) Uncouplers of oxidative phoshorylation via disruption of the proton gradient, for example Chlorfenapyr, DNOC and Sulfluramid.
14) Nicotinic acetylcholine receptor (nAChR) channel blockers, for example Bensultap, Cartap hydrochloride, Thiocyclam and Thiosultap-sodium.
15) Inhibitors of chitin biosynthesis, type 0, for example Bistrifluron, Chlorfluazuron, Diflubenzuron, Flucycloxuron, Flufenoxuron, Hexaflumuron, Lufenuron, Novaluron, Noviflumuron, Teflubenzuron and Triflumuron.
16) Inhibitors of chitin biosynthesis, type 1, for example Buprofezin.
17) Moulting disruptors, for example Cyromazine.
18) Ecdysone receptor agonists, for example Chromafenozide, Halofenozide, Methoxyfenozide and Tebufenozide.
19) Octopamine receptor agonists, for example Amitraz.
20) Mitochondrial complex III electron transport inhibitors, for example Hydramethylnon or Acequinocyl or Fluacrypyrim.
21) Mitochondrial complex I electron transport inhibitors, for example METI acaricides, e.g. Fenazaquin, Fenpyroximate, Pyrimidifen, Pyridaben, Tebufenpyrad and Tolfenpyrad or Rotenone (Derris).
22) Voltage-dependent sodium channel blockers, e.g. Indoxacarb or Metaflumizone.
23) Inhibitors of acetyl CoA carboxylase, for example tetronic and tetramic acid derivatives, e.g. Spirodiclofen, Spiromesifen and Spirotetramat.
24) Mitochondrial complex IV electron transport inhibitors, for example phosphines, e.g. Aluminium phosphide, Calcium phosphide, Phosphine and Zinc phosphide or Cyanide.
25) Mitochondrial complex II electron transport inhibitors, for example Cyenopyrafen and Cyflumetofen.
28) Ryanodine receptor modulators, for example diamides, e.g. (19.1) Chlorantraniliprole, (19.2) Cyantraniliprole and (19.3) Flubendiamide.

Further active ingredients with unknown or uncertain mode of action, for example Afidopyropen, Azadirachtin, Benclothiaz, Benzoximate, Bifenazate, Bromopropylate, Chinomethionat, Cryolite, Dicofol, Diflovidazin, Fluensulfone, Flometoquin, Flufenerim, Flufenoxystrobin, Flufiprole, Fluopyram, Flupyradifurone, Fufenozide, Heptafluthrin, Imidaclothiz, Iprodione, Meperfluthrin, Paichongding, Pyflubumide, Pyrifluquinazon, Pyriminostrobin, Tetramethylfluthrin and Iodomethane; furthermore products based on Bacillus firmus (including but not limited to strain CNCM I-1582, such as, for example,VOTiVO TM, BioNem) or one of the following known active compounds:3-bromo-N-{2-bromo-4-chloro-6-[(1-cyclopropylethyl)carbamoyl]phenyl}-1-(3-chloropyridin-2-yl)-1H-pyrazole-5-carboxamide (known from WO2005/077934) and 1-{2-fluoro-4-methyl-5-[(2,2,2-trifluorethyl)sulfmyl]phenyl}-3-(trifluoromethyl)-1H-1,2,4-triazol-5-amine (known from WO2006/043635), {1'-[(2E)-3-(4-chlorophenyl)prop-2-en-1-yl]-5-fluorospiro[indole-3,4'-piperidin]-1(2H)-yl}(2-chloropyridin-4-yl)methanone (known from WO2003/106457), 2-chloro-N-[2-{1-[(2E)-3-(4-chlorophenyl)prop-2-en-1-yl]piperidin-4-yl}-4-(trifluoromethyl)phenyl]isonicotinamide (known from WO2006/003494), 3-(2,5-dimethylphenyl)-4-hydroxy-8-methoxy-1,8-diazaspiro[4.5]dec-3-en-2-one (known from WO2009/049851), 3-(2,5-dimethylphenyl)-8-methoxy-2-oxo-1,8-diazaspiro[4.5]dec-3-en-4-yl ethyl carbonate (known from WO2009/049851), 4-(but-2-yn-1-yloxy)-6-(3,5-dimethylpiperidin-1-yl)-5-fluoropyrimidine (known from WO2004/099160), 4-(but-2-yn-1-yloxy)-6-(3-chlorophenyl)pyrimidine (known from WO2003/076415), PF1364 (CAS-Reg.No. 1204776-60-2), 4-[5-(3,5-dichlorophenyl)-5-(trifluoromethyl)-4,5-dihydro-1,2-oxazol-3-yl]-2-methyl-N-{2-oxo-2-[(2,2,2-trifluoroethyl)amino]ethyl}benzamide (known from WO2005/085216), 4-{5-[3-chloro-5-(trifluoromethyl)phenyl]-5-(trifluoromethyl)-4,5-dihydro-1,2-oxazol-3-yl}-N-{2-oxo-2-[(2,2,2-trifluoroethyl)amino]ethyl}-1-naphthamide (known from WO2009/002809), methyl 2-[2-({[3-bromo-1-(3-chloropyridin-2-yl)-1H-pyrazol-5-yl]carbonyl}amino)-5-chloro-3-methylbenzoyl]-2-methylhydrazinecarboxylate (known from WO2005/085216), methyl 2-[2-({[3-bromo-1-(3-chloro-pyridin-2-yl)-1H-pyrazol-5-yl]carbonyl}amino)-5-cyano-3-methylbenzoyl]-2-ethylhydrazinecarboaylate (known from WO2005/085216), methyl 2-[2-({[3-bromo-1-(3-chloropyridin-2-yl)-1H-pyrazol-5-yl]carbonyl}amino)-5-cyano-3-methylbenzoyl]-2-methylhydrazinecarboxylate (known from WO2005/085216), methyl 2-[3,5-dibromo-2-({[3-bromo-1-(3-chloropyridin-2-yl)-1H-pyrazol-5-yl]carbonyl}amino)benzoyl]-2-ethylhydrazinecarboxylate (known from WO2005/085216), 1-(3-chloropyridin-2-yl)-N-[4-cyano-2-methyl-6-(methylcarbamoyl)phenyl]-3-{[5-(trifluoromethyl)-2H-tetrazol-2-yl]methyl}-1H-pyrazole-5-carboxamide (known from WO2010/069502), N-[2-(5-amino-1,3,4-thiadiazol-2-yl)-4-chloro-6-methylphenyl]-3-bromo-1-(3-chloropyridin-2-yl)-1H-pyrazole-5-carboxamide (known from CN102057925), 3-chloro-N-(2-cyanopropan-2-yl)-N-[4-(1,1,1,2,3,3,3-heptafluoropropan-2-yl)-2-methylphenyl]phthalamide (known from WO2012/034472 ), 8-chloro-N-[(2-chloro-5-methoxyphenyl)sulfonyl]-6-(trifluoromethyl)imidazo[1,2-a]pyridine-2-carboxamide (known from WO2010/129500 ), 8-chloro-N-[(2-chloro-5-methoxyphenyl)sulfonyl]-6-(trifluoromethyl)imidazo[1,2-a]pyridine-2-carboxamide (known from WO2009/080250 ), N-[(2E)-1-[(6-chloropyridin-3-yl)methyl]pyridin-2(1H)-ylidene]-2,2,2-trifluoroacetamide (known from WO2012/029672 ), 1-[(2-chloro-1,3-thiazol-5-yl)methyl]-4-oxo-3-phenyl-4H-pyrido[1,2-a]pyrimidin-1-ium-2-olate (known from WO2009/099929), 1-[(6-chloropyridin-3-yl)methyl]-4-oxo-3-phenyl-4H-pyrido[1,2-a]pyrimidin-1-ium-2-olate (known from WO2009/099929 ), (5S,8R)-1-[(6-chloropyridin-3-yl)methyl]-9-nitro-2,3,5,6,7,8-hexahydro-1H-5,8-epoxyimidazo[1,2-a]azepine (known from WO2010/069266), (2E)-1-[(6-chloropyridin-3-yl)methyl]-N'-nitro-2-pentylidenehydrazinecarboximidamide (known from WO2010/060231), 4-(3-{2,6-dichloro-4-[(3,3-dichloroprop-2-en-1-yl)oay]phenoay}propoay)-2-methoay-6-(trifluoromethyl)pyrimidine (known from CN101337940), N-[2-(tert-butylcarbamoyl)-4-chloro-6-methylphenyl]-1-(3-chloropyridin-2-yl)-3-(fluoromethoay)-1H-pyrazole-5-carboxamide (known from WO2008/134969).

Although the agrochemical or agrochemicals can be selected independently from the substances mentioned above and also combined in any possible way, it is preferred that at least one agrochemical is selected from isotianil, sedaxane, penflufen, azole fungicides, in particular tebuconazole, ipconazole, propiconazole or difenoconazole, strobilurins, in particular trifloxystrobin, azoxystrobin or picoxystrobin, penthiopyrad, metalaxyl, fludioxonil, tiadinil, fipronil, flubendiamide, chlorantraniliprol, cyantraniliprole, imidacloprid, thiacloprid, thiamethoxam, clothianidin, spinosad, tetraniliprole, ethiprole or mixtures thereof, preferably a combination of isotianil and trifloxystrobin, isotianil and penflufen or penflufen and trifloxystrobin. Particularly preferred are penflufen, isotianil, chlorantraniliprole, trifloxystrobin, tetraniliprole and ethiprole. In one embodiment the agrochemical is isotianil. According to another embodiment, the agrochemical is chlorantraniliprole. These agrochemicals are particularly preferred for the inventive coating of rice seed as fit to the rice-specific diseases and pests and because the inventive copolymer effectively prevents wash-off of these substances from the coated seed.

The seed coating may further comprise at least one colorant, a surfactant, an organic solvent and/ or a further polymer or copolymer. Adding a colorant, like red, green, blue or the like, has the advantage that it is obvious to everyone that the rice seed is treated so the danger that the coated rice is unintentionally used for food purposes is drastically reduced. Furthermore, the colorant may indicate that the coating remains on the seed during soaking and incubation. The colorant could for example be chosen not only by its color but also by its bleeding behavior from the coating in so far that it is similar to the agrochemicals used in the coating. Thus, the applicant may actually see that coating wash-off practically does not occur. In this context, the colorant may be used as semi-quantitative benchmark for the bleeding behavior, for example by comparison of the color of the seeds before and after soaking with color tables which indicate the relation between color and agrochemical content. For the purpose of color intensity before and after soaking, also spectroscopic methods may be used. Furthermore, the colorant can also indicate quality of coating showing with respect to coating evenness across or between all seeds.

The colorant used may be of visible color or also a UV-dye. If an inorganic colorant is used, it may at the same time work as a source of trace elements.

The coating may have any structure or layer sequence possible. According to one preferred embodiment, the copolymer and the agrochemical are mixed before being applied to the seed, whereas in particular the coated rice seed is then treated with a further agrochemical, preferably with an insecticide. The agrochemical mixed with the copolymer is favorable a fungicide.

Alternatively, the copolymer and the agrochemical can be applied to the seed in sequential manner, whereas preferably the seed is coated first with at least one agrochemical and then with the copolymer.

The application rate of the copolymer may vary in broad ranges. The application rate is for example 0,001 to 2,5 wt.-% in relation to the weight of the untreated seed, in particular 0,01 to 1,25 wt.-%, preferably 0,025 to 1 wt.-%.

The application rate of the agrochemical mainly depends on the dosage requirement and can be adopted by the skilled person. Just to give an example, the application rate of the agrochemical is 0,001 to 5 wt.-% in relation to the weight of the untreated seed, in particular 0,01 to 2,5 wt.-%, preferably 0,05 to 1 wt.-%. To give non-limiting examples for specific fungicides, the application rate of isotianil may be chosen from 0,05 to 2 wt.-%, in particular from 0,1 to 1 wt.-% and the application rate of trifloxystrobin may be chosen from 0,01 to 1 wt.-%, in particular from 0,05 to 0,5 wt.-%, each in relation to the weight of the untreated seed.

The agrochemical may be used in any available form or formulation, for example as a solid, for example a (wettable) powder, water-soluble formulations, liquid formulations, applicable liquids, aqueous suspensions, dispersions or emulsions, microcapsule preparations, just to give a few examples. The formulations can be obtained by known methods, for example by mixing the agrochemical with developers, that is, liquid or solid diluents or carriers, and, in some cases, with surfactants, that is, emulsifiers and/or dispersants. In the case water is used as a developing agent, organic solvents, for example, can be used as auxiliary solvents.

In the present invention, aqueous suspensions of the agrochemical are preferable from workability point of view. As an aqueous suspension agent, aqueous suspension compositions comprising water, surfactants, liquid diluents (organic solvents), and polymer resins, especially acryl resins ((co)polymer resin comprising of acrylic acid alkyl esters and/or methacrylic acid alkyl esters) besides the agrochemical are particularly preferable from the viewpoint of durability of the effect.

Antifoaming agents, antiseptics, thickening agents, dispersants, antifreezing agents, and the like can be added to said aqueous suspension of the agrochemical as needed. The preferred agrochemical content in the aqueous suspension composition is from 1 to 50 wt.-%, particularly from 5 to 40 wt.-%. The preferred surfactant content is from 0.01 to 10 wt.-%, particularly 0.1 to 5 wt.-%. The preferred diluent content is from 1 to 50 wt.-%, particularly 5 to 30 wt.-%. The preferred acrylic resin content is from 0.1 to 20 wt.-%, particularly from 1 to 10 wt.-%. For other added ingredients such as antifoaming agents, antiseptics and thickening agents, the preferred total content is from 0 to 10 wt.-%, particularly from 0.1 to 5 wt.-%. A granular polymer resin is preferred as the polymer resin in the aqueous suspension composition and those that are finely pulverized by grinding, and the like is particularly preferred.

As the examples of liquid diluents or carriers, there may be mentioned aromatic hydrocarbons (for example, xylene, toluene, alkyl naphthalene, and the like), chlorinated aromatics or chlorinated aliphatic hydrocarbons (for example, chlorobenzenes, ethylene chlorides, methylene chlorides, and the like), aliphatic hydrocarbons [for example, cyclohexane, and the like, paraffins (for example, mineral oil fractions, and the like)], alcohols (for example, C₂₋₁₀ alcohols such as butanol, ethylene glycol, glycols such as propylene glycol, and the like, and their ethers, esters and the like), ketones (for example, acetone, methyl ethyl ketone, methyl isobuthyl ketone, cyclohexanone, and the like), strongly polar solvents (for example, dimethylformamide, dimethyl sulfoxide, and the like), water, and the like.

As the examples of solid diluents or carriers, there may be mentioned crushed natural minerals (for example, kaolin, clay, talc, chalk, quartz, attapulgite, montmorillonite, diatom earth, and the like), crushed synthetic minerals (for example, bentonite, silicic acid, alumina, silicate, silica sand, and the like), and the like. As the examples of solid carriers for granular formulations, there may be mentioned crushed and sorted rocks (for example, calcite, marbles, pumice stones, meerschaum, dolomite, and the like), synthetic granules of inorganic and organic powders, fine grains, and the like of organic substances (for example, sawdusts, coconut shells, corncobs, tobacco stems, and the like).

As the examples of surfactants, there may be mentioned non-ionic and anionic surfactants [for example, polyoxyethylene fatty acid esters, polyoxyethylene fatty acid alcohol ethers (for example, alkyl aryl polyglycol ether, alkyl sulfonate, alkyl sulfate, arylsulfonate), tristyrylphenols and their ethoxylates], albumin hydrolysates, and the like.

As the examples of dispersants, there may be included lignin-sulfite waste liquors, methyl cellulose, and the like.

Adhesive agents can also be added to the formulations (powder formulations, granular formulations, emulsions), and as the examples of said adhesive agents there may be mentioned carboxy methyl cellulose, natural and synthetic polymers (for example, gum Arabic, polyvinyl alcohols, polyvinyl acetates, and the like).

Coloring agents can also be used in the formulation, and as the examples of said coloring agents there may be mentioned inorganic pigments (for example, iron oxides, titanium oxides, Prussian blues, and the like), and organic dyes such as alizarin dyes, azo dyes and metal phthalocyanine dyes, as well as trace elements such as metal salts of iron, manganese, boron, copper, cobalt, molybdenum, zinc, and the like.

The zinc compound may be any suitable and acceptable zinc salt (inorganic or organic) or oxide, e.g. ZnO (zinkoxide), zinc sulphates, zinc phosphates, zinc acetate, zinc citrate. In a preferred embodiment zinc oxide is used.

The amount of the zinc salt or oxide in the coating may be from 5 to 25%, preferably from 7 to 17% and more preferably from 10 to 20%. If not otherwise indicated in the present invention % refers to wt.-%.

There are no particular restrictions to the methods for providing the inventive coating to rice seeds. The compositions of the coating may be in liquid form but it is also possible that the agrochemical is in solid form and the copolymer is in liquid form. In such a case, the agrochemical can be brought onto the seed surface by any powder coat method, followed by any liquid coating method for the copolymer. The coating can be applied in one step, but also in two steps or more, if further coating layers are to be applied.

As the method of powder-coating, for example, there is a method, wherein rice seeds and the agrochemical are put in a rotary drum and the rice seeds are coated homogeneously with the agrochemical by rotating the drum. As the methods for spraying the agrochemical, the copolymer or a mixture of both, there are, for example, (1) a method, wherein the agrochemical, the copolymer or a mixture of both is directly sprayed to the rice seeds falling from a hopper and the like by using an appropriate nozzle, (2) a method, wherein a vibrating guide plate is attached from a hopper to a nursery box, and the rice seeds are sprayed with the agrochemical, the copolymer or a mixture of both using an appropriate nozzle when the rice seeds pass bouncing on the plate, and (3) a method, wherein a drum, through which the rice seeds pass, is installed between a hopper and above a nursery box, and the agrochemical, the copolymer or a mixture of both is sprayed to the rice seeds passing through the drum.

As a method for spraying the agrochemical, the copolymer or a mixture of both to the rice seeds in a small scale, a method, wherein the rice seeds are put into a rotating machine like a mortar mixer, and a predetermined dose of the agrochemical, the copolymer or a mixture of both is homogeneously sprayed to the rice seeds with an appropriate sprayer, can also be used. And also, a method, wherein the rice seeds are put into a plastic bag or an appropriate container with twice to three times the volume of the rice seeds, and after the agrochemical, the copolymer or a mixture of both is added, it is closed (for a plastic bag, the entrance of the bag is closed after the inside of the bag is filled with air so that the whole bag is inflated), shook and stirred so that the agrochemical, the copolymer or a mixture of both spreads inside the whole container or the bag, can also be used.

In the case of spraying a large amount of rice seeds, it is possible to install a spray nozzle in the midst of the transporting means leading to a sowing machine for nursery boxes to spray the agrochemical, the copolymer or a mixture of both. This can be followed by a mixing step and an optional drying step.

A further embodiment of the present invention is a rice seed treatment agent, characterized in that the treatment agent comprises a
a) mixture of copolymers, consisting of a copolymer of butylacrylate and 1,4-diethenylbenzene and styrene, and a copolymer of butylacrylate and styrene, and
b) at least one agrochemical.

Yet a further embodiment of the present invention is a coated rice seed being at least partially coated with the inventive rice seed treatment agent.

As set out above, the inventive coating protects the seed from disease and pest without major impact on the germination rate. Hence, the typical preparation of the rice seed known to the applicant comprising soaking in water and incubation before sowing can be maintained. Preferably, the coated rice seed of this invention shows an average germination rate reduction of 0 to 10 % after soaking the rice seed in water at 25°C followed by incubating the soaked rice seed at 7°C for 144 hours (6 days) compared to untreated rice seed of the same variety and age, preferably 0 to 5 %. Soaking of the seed is carried out for example by spreading 30 seeds over a tissue paper and spraying 50 mL of water over the paper. The paper is then rolled up and put into a closed jar and exposed to the above-mentioned temperature and humidity conditions in the dark, for example in a refrigerator. The germination tests are carried out under the test conditions explained above, whereas the evaluation is made by counting at least 30 seeds, randomly chosen. This test is made with at least three samples, soaked and incubated in different containers and the average germination rate is calculated.

Furthermore, the coated rice seed can be stored without significant reduction of germination rate and/or activity loss of the agrochemical(s) for several months.

The coated rice seed of the present invention allows soaking in water without substantial loss of the agrochemical by wash-off or bleeding. This, in a preferred embodiment of the invention, the coated rice seed shows a release rate of the agrochemical during soaking of the rice seed in water at 30°C for 24h without agitation of 3 wt.-% or less compared to the total weight of that agrochemical in the coating, in particular 2 wt.-% or less. The agrochemical is in particular selected from fungicides and insecticides.

Another embodiment of this invention is a method for protecting emerging seedlings of rice plants against fungal diseases and/ or pests before planting, the method comprising the steps of:
a. Soaking the coated rice seed according to the present invention in water, in particular for at least 12 hours, preferably at a temperature of 10 to 40 °C, more preferred at 20 to 30 °C and
b. if desired, incubating the soaked rice seed for at least 36 hours, in particular for at least 72 hours,
wherein optionally at least one further agrochemical is applied to the rice seed during soaking and/ or incubating and wherein the further agrochemical is in particular an insecticide, preferably thiamethoxam, imidacloprid, clothianidin or mixtures thereof. By this method, it is possible to adjust the protection profile to the actual requirements, for example, if a danger of insect pest is eminent. The rice seed may be sowed after soaking or the optional incubation step in nursery boxes (for example with a size of 60 cm × 30 cm × 3 cm), for example. However, it is also in the range of the present invention that the rice seed is directly seeded in-field after soaking for cultivation or into in-field nursery systems for later transplantation.

There are in principle no restrictions concerning soaking methods of rice seeds and it is preferred in the above described method for protecting emerging seedlings to have rice seeds absorb enough water with accumulated temperature of 60 to 140 °C · days (for example, from 7 to 10 days at 13 to 14 °C). Incubation can be carried out for at least 24 hours, preferably for at least 72 or even 132 hours, at 20 to 40°C, preferably at 25 to 35°C, after soaking, for example.

Methods for raising seedlings of rice after rice seeds are sowed in nursery boxes and covered with soil, transplantation of seedlings to rice paddies and the raising of rice after transplantation are not restricted in particular, and a commonly known method can be adopted. For example, after covering the seeds with soil, each nursery box is put in a nursery cabinet and the seeds are germinated, and then, nursery boxes are moved to a nursery house, and are further raised. It is only necessary to transplant the raised seedlings in rice paddies by using a cultivator, and the like. There are also no restrictions concerning the raising methods of rice after transplanted to the rice paddies, and rice can be raised in accordance with conventional methods.

The inventive coating typically allows a longer lasting protection compared to the seed directly coated with the respective agrochemical while requiring a lower amount of agrochemicals. For example, in the inventive method for protecting emerging seedlings of rice plants, the disease and/ or pest protection may still be observed at 50 or more days after transplantation of the soaked and incubated seed, in particular at 60 or more days. A typical disease against which protection is achieved, is caused by filamentous fungi and/or microorganisms. The disease is particularly selected from rice blast (caused by *Pyricularia oryzae),* rice brown spot or rice head blight (caused by *Cochliobolus miyabeanus),* rice sheath blight (caused by *Rhizoctonia solani),* rice bacterial leaf blight (caused by *Xanthomonas oryzae* pv. *oryzae),* rice bacterial grain rot (caused by *Burkholderia glumae)* or combinations thereof.

In a further aspect of the inventive method for protecting emerging seedlings, the pest is an animal pest, which is in particular selected from *Lissorhoptrus oryzophilus* , *Oulema oryzae Kuwayama, Delphacidae, Nephotettix cincticeps, Hydrelliα griseola* (rice leaf miner), *Parnara guttata* (rice skipper), *Naranga aenescens Moore, Cnaphalocrocis medinalis, Chilo suppressalis, Stenchaetothrips biformis* (rice thrips) or combinations thereof.

The present invention will further be explained on the basis of the following example.

Substances used:

### Agrochemical formulation:

Formulation a) As agrochemical, a water-based formulation containing isotianil (280 g/L) was used.

Formulation b) As agrochemical, a water-based formulation containing isotianil (200 g/L) and trifloxystrobin (80 g/L) was used. The formulation had an overall water content of about 60 wt.-% and further contained 2,5 wt.-% of a mixture of a red pigment as well as further additives like defoamers, thickeners and the like. This is further referred to as "agrochemical formulation" in the following.

### Copolymer:

As copolymer mixture, a non-plasticized aqueous mixture of a copolymer dispersion was used comprising a first copolymer being a copolymer of butylacrylate and 1,4-diethenylbenzene and styrene (CAS No. 57516-68-4 ), and a second copolymer being a copolymer of butylacrylate and styrene (CAS No. 25767-47-9) in a ratio of 1:1.

### Zinc:

As zinc source zinc oxide was used.

### HPLC Determination of release of agrochemical in wash-off-water

In order to determine the adherence of the agrochemical to the rice seed, the coated and dried seeds were objected to soaking in water and incubation preparation, which is a typical method before sowing. During this procedure, samples of the soaking water were collected at fixed time points and analysed by HPLC with respect to its contents regarding agrochemicals.

### Experiments:

### Experiment 1) Absorption of zinc into the seedling and retention of agrochemical and colorant in the coating

### FORMULA

| | Example 1 | Example 2 |
|---|---|---|
| First copolymer (CAS No. 57516-68-4) | 37,9 | 43,30 |
| Second copolymer (CAS No. 25767-47-9) | 37,9 | 43,30 |
| Zink oxide | 24,21 | 13,41 |
| Application rate | 1ml/kg | 2ml/kg |

### METHODS:

The rice is treated with Routine Start SC280 (isotianil) at 20 L/T

| | |
|---|---|
| - without filmcoating | (object 1) |
| - Example 1 at 1ml/kg | (object 2) |
| - Example 2 at 2ml/kg | (object 3) |

Treated rice is soaked (20g of rice in 100 mL of water over 12h):
The quantity of zinc on seeds before soaking and in the water after soaking have been analysed (Zinc in soaked water is analyzed by EN11885 / Zinc in seeds is analyzed by mineralization following MO147 and then by NFENISO6869 adapted)

The quantity of isotianil on seeds before and after soaking have been analysed (determined by HPMC). The coloration of soaking water have been observed (visiual inspection).

The impact of the zinc on the plants weight have been measured

### ZINC ANALYSIS

### Zinc on seeds before soaking:

| Routine^{®} Start SC280 (BAYER) | Zn quantity (mg/kg de riz) |
|---|---|
| Naked seeds | 8,4 |
| Routine Start SC280 (isotianil) at 20 L/T (object 1) | 20,80 |
| Routine Start SC280 (isotianil) at 20 L/T + Example 1 at 1ml/kg (object 2) | 100,40 |
| Routine Start SC280 (isotianil) at 20 L/T + Example 2 at 2ml/kg (object 3) | 112,20 |

### Release of zinc in soaking water

| | % of zinc release in water |
|---|---|
| Routine Start SC280 (isotianil) at 20 L/T (object 1) | 1,20 |
| Routine Start SC280 (isotianil) at 20 L/T + Example 1 at 1ml/kg (object 2) | 27,89 |
| Routine Start SC280 (isotianil) at 20 L/T + Example 2 at 2ml/kg (object 3) | 23,17 |

### ISOTIANIL ANALYSIS

| | Quantity of isotianil on seeds before soaking / theoritical quantity (%) | % of isotianil release in water |
|---|---|---|
| Routine Start SC280 (isotianil) at 20 L/T (object 1) | 95,7 | 27,6 |
| Routine Start SC280 (isotianil) at 20 L/T + Example 1 at 1ml/kg (object 2) | 93,1 | -1,9 |
| Routine Start SC280 (isotianil) at 20 L/T + Example 2 at 2ml/kg (object 3) | 90,8 | 4,1 |

### PLANTS WEIGHT

| 32 days in soil test at à 25°C | Weight of 50 plants aerial part (g) |
|---|---|
| Routine Start SC280 (isotianil) at 20 L/T (object 1) | 10.51 |
| Routine Start SC280 (isotianil) at 20 L/T + Example 1 at 1ml/kg (object 2) | 11.69 |
| Routine Start SC280 (isotianil) at 20 L/T + Example 2 at 2ml/kg (object 3) | 12.52 |

### WATER COLORATION

| After 12h at room temperature | Weight of 50 plants aerial part (g) |
|---|---|
| Routine Start SC280 (isotianil) at 20 L/T (object 1) | +++ |
| Routine Start SC280 (isotianil) at 20 L/T + Example 1 at 1ml/kg (object 2) | + |
| Routine Start SC280 (isotianil) at 20 L/T + Example 2 at 2ml/kg (object 3) | + |

| | |
|---|---|
| 0 = no coloration, + = weak coloration, ++ = strong coloration, +++ = very strong coloration | |

### WATER COLORATION

| After 36h at room temperature | Weight of 50 plants aerial part (g) |
|---|---|
| Seed coated with red Colorant and coating according to WO 2016/055439 (Peridiam 104) after 36h | +++ |
| Seed coated with red Colorant and coating according to the invention after 36h | + |
| Seed coated with red Colorant and no coating after 36h | +++ |

### FLOABILITY

| Pouring test | Weight of 50 plants aerial part (g) |
|---|---|
| Coating according to WO 2016/055439 (Peridiam 104) | Highly viscous, poor flowability |
| Coating according to the invention after 36h | Good viscosity, good flowability |

### RETENTION OF VARIOUS AGROCHEMICALS

| Product | Dose | elution rate (%) | | |
|---|---|---|---|---|
| | (ml/kg seed) | 15C | 30C | 60C |
| | | 24 h | 24 h | 10 min |
| Isotianil FS 500 | 12 + 0 | 2,6% | 4,5% | 2,7% |
| Isotianil FS 500 + Peridiam 104 | 12 + 2 | 0,1% | 0,2% | 0,2% |
| Isotianil FS 500 + copolymer mixture according to the invention | 12 + 2 | 0,1% | 0,1% | 0,1% |
| Isotianil FS 200 | 30 + 0 | N.T. | 1,7% | N.T. |
| Isotianil FS 200 + Peridiam 104 | 30 + 2 | N.T. | 0,3% | N.T. |
| Isotianil FS 200 + copolymer mixture according to the invention | 30 + 2 | N.T. | 0,4% | N.T. |
| | | | | |
| Tetraniliprole FS 480 | 11 + 0 | 16,0% | 32,6% | 35,7% |
| Tetraniliprole FS 480 + Peridiam 104 | 11 + 2 | 0,5% | 0,5% | 0,6% |
| Tetraniliprole FS 480 + copolymer mixture according to the invention | 11 + 2 | 0,4% | 0,4% | 0,3% |
| | | | | |
| Penflufen FS 500 | 10 + 0 | 5,2% | 7,3% | 7,0% |
| Penflufen FS 500 + Peridiam 104 | 10 + 2 | 0,6% | 0,7% | 1,1% |
| Penflufen FS 500 + Peridiam copolymer mixture according to the invention | 10 + 2 | 0,6% | 0,7% | 1,1% |
| | | | | |
| Ethiprole FS 350 | 40 + 0 | NT | 61,7% | NT |
| Ethiprole FS 350 + Peridiam 104 | 40 + 2 | NT | 2,3% | NT |
| Ethiprole FS 350 + copolymer mixture according to the invention | 40 + 2 | NT | 1,1% | NT |
| Ethiprole FS 350 (Lot1436) | 40 + 0 | NT | 73,3% | NT |
| Ethiprole FS 350 + Peridiam 104 | 40 + 2 | NT | 4,9% | NT |
| Ethiprole FS 350 + copolymer mixture according to the invention | 40 + 2 | NT | 1,4% | NT |
| | | | | |
| Thiacloprid FS 400 | 9 + 0 | NT | 10,5% | NT |
| Thiacloprid FS 400 + Peridiam 104 | 9 + 2 | NT | 9,66% | NT |
| Thiacloprid FS 400 + copolymer mixture according to the invention | 9 + 1 | NT | 8,96% | NT |
| Thiacloprid FS 400 + copolymer mixture according to the invention | 9 + 2 | NT | 9,36% | NT |
| Thiacloprid FS 400 + copolymer mixture according to the invention | 9 + 4 | NT | 8,61% | NT |

### Germination testing

Seeds were planted and after 35 days at 25°C and the seeds are evaluated for germination, seedling dry matter, Zn concentration and absolute Zn content of the seedling.

| Seed coating | Final germination (%) | Seedling Dry Matter X100 (g) | Zn concentration (ppm) | Absolute Zn (gX10-6) |
|---|---|---|---|---|
| Peridiam 104 Routine Start SC280 (isotianil) at 2 L/T | 95,8 | 103,2 | 25,6 | 26,3 |
| Routine Start SC280 (isotianil) at 2 L/T + Example 2 at 2ml/kg (object 3) | 96,5 | 110,2 | 31,6 | 34,7 |

### Biological efficacy testing

Seeds were treated with IST 500FS (BAYER), IST 200 FS BAYER and Evergole Wide with non-diluted, water-diluted and coatings according to the instant invention and tested a 25 to 30 days for efficacy against *Pyricularia oryzae* and *Rhizoctonia solani.* It was found that the new seed coatings were as effective as conventional treatments.

## Claims

1. A method for preparing a coated rice seed wherein a seed coating is at least partially applied to the surface of dry rice seed, **characterized in that** the seed coating comprises at least
a mixture of a first copolymer of butyl acrylate and 1,4-diethenylbenzene and styrene, and a second copolymer of butyl acrylate and styrene, and at least one agrochemical.

2. The method according to claim 1, **characterized in that** the first copolymer is prepared from at least:
a. 45 to 65 wt.-% butyl acrylate, in particular 50 to 70 wt.-%, preferably 55 to 65 wt.-%;
b. 35 - 55 % wt.-% styrene and 1,4-diethenylbenzene, in particular 30 to 50 wt.-%, preferably 35 to 45 wt.-%.

3. The method according to claim 2 or 3, **characterized in that** the second copolymer is prepared from at least:
a) 35 to 65 wt.-% butyl acrylate, in particular 40 to 60 wt.-%, preferably 45 to 55 wt.-%;
b) 35 - 65 % wt.-% styrene, in particular 40 to 60 wt.-%, preferably 45 to 55 wt.-%.

4. The method according to any of the preceding claims, **characterized in that** the ratio of the first to the second polymer is in the range of 3:1 to 1:3, preferably in the range of 2:1 to 1:2, more preferred in the range of 1.5:1 to 1:1.5, and most preferred 1:1.

5. The method according to any of the preceding claims, **characterized in that** the first copolymer has a weight average molecular weight Mw in the range of 400,000 to 800,000 g/mol, preferably 500,000 to 700,000 g/mol, and more preferred 550,000 - 650,000 g/mol, and that the second copolymer has a weight average molecular weight Mw in the range of 25,000 to 125,000 g/mol, preferably 30,000 to 100,000 g/mol, and more preferred 40,000 - 80,000 g/mol.

6. The method according to any of the preceding claims, **characterized in that** the seed coating further comprises a zinc salt or a zinc oxide.

7. The method according to any of the preceding claims, **characterized in that** the seed coating further comprises a colorant.

8. The method according to any of the preceding claims, **characterized in that** the copolymer is applied to the seed in the form of a dispersion, in particular in the form of a water-based dispersion.

9. The method according to claim 8, **characterized in that** the dispersion is mostly free of plasticizers and/ or non-ionic detergents, in particular mostly free of alkylphenolethoxylate.

10. The method according to any of the preceding claims, **characterized in that** the agrochemical is selected from the group comprising insecticides, fungicides, bactericides, virucides, miticides, molluscicides, nematicides, ovicides, repellents, rodenticides, herbicides, safeners, fertilizers, biologicals, or mixtures thereof.

11. The method according to any of the preceding claims, **characterized in that** at least one agrochemical is selected from isotianil, sedaxane, penflufen, azole fungicides, in particular tebuconazole, ipconazole, propiconazole or difenconazole, strobilurins, in particular trifloxystrobin, azoxystrobin or picoxystobin, penthiopyrad, metalaxyl, fludioxonil, tiadinil, fipronil, flubendiamide, chlorantraniliprole, cyantraniliprole, imidacloprid, thiacloprid, thiamethoxam, clothianidin, spinosad, ethiprole tetraniliprole or mixtures thereof, preferably a combination of
a. isotianil and trifloxystrobin,
b. isotianil and penflufen or
c. penflufen and trifloxystrobin.

12. The method according to any of the claims 1 to 11, **characterized in that** the copolymer and the agrochemical are applied to the seed in sequential manner, whereas preferably the seed is coated first with at least one agrochemical and then with the copolymer.

13. Seed coating suitable for at least partially coating a rice seed with a rice seed treatment agent, **characterized in that** the rice seed treatment agent comprises a mixture of a first copolymer of butyl acrylate and 1,4-diethenylbenzene and styrene, and a second copolymer of butyl acrylate and styrene, and at least one agrochemical.

14. Seed coating according to claim 13, **characterized in that** the first copolymer is prepared from 45 to 65 wt.-% butyl acrylate, in particular 50 to 70 wt.-%, preferably 55 to 65 wt.-%; and 35 - 55 % wt.-% styrene and 1,4-diethenylbenzene, in particular 30 to 50 wt.-%, preferably 35 to 45 wt.-%; and the second copolymer is prepared from at least a) 35 to 65 wt.-% butyl acrylate, in particular 40 to 60 wt.-%, preferably 45 to 55 wt.-%; and b) 35 - 65 % wt.-% styrene, in particular 40 to 60 wt.-%, preferably 45 to 55 wt.-%.

15. Seed coating according to claim 13 or 14, **characterized in that** ratio of the first to the second polymer is in the range of 3: 1 to 1:3, preferably in the range of 2:1 to 1:2, more preferred in the range of 1.5:1 to 1:1.5, and most preferred 1:1.

16. Seed coating according to any one or more of claims 13 to 15, **characterized in that** the first copolymer has a weight average molecular weight Mw in the range of 400,000 to 800,000 g/mol, preferably 500,000 to 700,000 g/mol, and more preferred 550,000 - 650,000 g/mol; and that the second copolymer has a weight average molecular weight Mw in the range of 25,000 to 125,000 g/mol, preferably 30,000 to 100,000 g/mol, and more prefered 40,000 - 80,000 g/mol.

17. Seed coating according to any one or more of claims 13 to 16, **characterized in that** the seed coating further comprises a zinc salt or zinc oxide.

18. Seed coating according to any one or more of claims 13 to 17, **characterized in that** the seed coating further comprises a colorant and optionally further adjuvants.

19. Seed coating according to any one or more of claims 13 to 18, **characterized in that** the at least one agrochemical is selected from the group of penflufen, isotianil, chlorantraniliprole, trifloxystrobin, tetraniliprole and ethiprole.

## Patentansprüche

1. Verfahren zur Herstellung von beschichtetem Reissaatgut, bei dem eine Saatgutbeschichtung zumindest teilweise auf die Oberfläche von trockenem Reissaatgut aufgebracht wird, **dadurch gekennzeichnet, dass** die Saatgutbeschichtung mindestens
eine Mischung aus einem ersten Copolymer aus Butylacrylat und 1,4-Diethenylbenzol und Styrol und einem zweiten Copolymer aus Butylacrylat und Styrol und mindestens einer Agrochemikalie umfasst.

2. Verfahren nach Anspruch 1, **dadurch gekennzeichnet, dass** das erste Copolymer hergestellt wird aus mindestens:
a. 45 bis 65 Gew.-% Butylacrylat, insbesondere 50 bis 70 Gew.-%, vorzugsweise 55 bis 65 Gew.-%,
b. 35 - 55 Gew.-% Styrol und 1,4-Diethenylbenzol, insbesondere 30 bis 50 Gew.-%, vorzugsweise 35 bis 45 Gew.-%.

3. Verfahren nach Anspruch 2 oder 3, **dadurch gekennzeichnet, dass** das zweite Copolymer hergestellt wird aus mindestens:
a) 35 bis 65 Gew.-% Butylacrylat, insbesondere 40 bis 60 Gew.-%, vorzugsweise 45 bis 55 Gew.-%,
b) 35 - 65 Gew.-% Styrol, insbesondere 40 bis 60 Gew.-%, vorzugsweise 45 bis 55 Gew.-%.

4. Verfahren nach einem der vorhergehenden Ansprüche, **dadurch gekennzeichnet, dass** das Verhältnis von erstem zu zweitem Polymer im Bereich von 3:1 bis 1:3, vorzugsweise im Bereich von 2:1 bis 1:2, besonders bevorzugt im Bereich von 1,5:1 bis 1:1,5 und am meisten bevorzugt 1:1 liegt.

5. Verfahren nach einem der vorhergehenden Ansprüche, **dadurch gekennzeichnet, dass** das erste Copolymer ein gewichtsmittleres Molekulargewicht Mw im Bereich von 400.000 bis 800.000 g/mol, vorzugsweise 500.000 bis 700.000 g/mol, und besonders bevorzugt 550.000 - 650.000 g/mol hat und das zweite Copolymer ein gewichtsmittleres Molekulargewicht Mw im Bereich von 25.000 bis 125.000 g/mol, vorzugsweise 30.000 bis 100.000 g/mol, und besonders bevorzugt 40.000 - 80.000 g/mol hat.

6. Verfahren nach einem der vorhergehenden Ansprüche, **dadurch gekennzeichnet, dass** die Saatgutbeschichtung weiterhin ein Zinksalz oder ein Zinkoxid umfasst.

7. Verfahren nach einem der vorhergehenden Ansprüche, **dadurch gekennzeichnet, dass** die Saatgutbeschichtung weiterhin einen Farbstoff umfasst.

8. Verfahren nach einem der vorhergehenden Ansprüche, **dadurch gekennzeichnet, dass** das Copolymer in Form einer Dispersion, insbesondere in Form einer Dispersion auf Wasserbasis, auf das Saatgut aufgebracht wird.

9. Verfahren nach Anspruch 8, **dadurch gekennzeichnet, dass** die Dispersion ist weitgehend frei von Weichmachern und/oder nichtionischen Detergenzien, insbesondere weitgehend frei von Alkylphenolethoxylat ist.

10. Verfahren nach einem der vorhergehenden Ansprüche, **dadurch gekennzeichnet, dass** die Agrochemikalie aus der Insektizide, Fungizide, Bakterizide, Viruzide, Mitizide, Molluskizide, Nematizide, Ovizide, Repellentien, Rodentizide, Herbizide, Safener, Düngemittel, Biologika und Mischungen davon umfassenden Gruppe ausgewählt ist.

11. Verfahren nach einem der vorhergehenden Ansprüche, **dadurch gekennzeichnet, dass** die mindestens eine Agrochemikalie aus Isotianil, Sedaxan, Penflufen, Azolfungiziden, insbesondere Tebuconazol, Ipconazol, Propiconazol oder Difenconazol, Strobilurinen, insbesondere Trifloxystrobin, azoxystrobin oder Picoxystobin, Penthiopyrad, Metalaxyl, Fludioxonil, Tiadinil, Fipronil, Flubendiamid, Chlorantraniliprol, Cyantraniliprol, Imidacloprid, Thiacloprid, Thiamethoxam, Clothianidin, Spinosad, Ethiprol, Tetraniliprol oder Mischungen davon ausgewählt ist, vorzugsweise aus einer Kombination von
a. Isotianil und Trifloxystrobin,
b. Isotianil und Penflufen oder
c. Penflufen und Trifloxystrobin.

12. Verfahren nach einem der Ansprüche 1 bis 11, **dadurch gekennzeichnet, dass** das Copolymer und die Agrochemikalie aufeinanderfolgend auf das Saatgut aufgebracht werden, wobei das Saatgut vorzugsweise zuerst mit der mindestens einen Agrochemikalie und dann mit dem Copolymer beschichtet wird.

13. Saatgutbeschichtung, geeignet für die mindestens teilweise Beschichtung eines Reissaatguts mit einem Reissaatgutbehandlungsmittel, **dadurch gekennzeichnet, dass** das Reissaatgutbehandlungsmittel eine Mischung eines ersten Copolymers aus Butylacrylat und 1,4-Diethenylbenzol und Styrol und eines zweiten Copolymers aus Butylacrylat und Styrol sowie mindestens eine Agrochemikalie umfasst.

14. Saatgutbeschichtung nach Anspruch 13, **dadurch gekennzeichnet, dass** das erste Cpolymer aus 45 bis 65 Gew.-% Butylacrylat, insbesondere 50 bis 70 Gew.-%, vorzugsweise 55 bis 65 Gew.-%, und 35 - 55 Gew.-% Styrol und 1,4-Diethenylbenzol, insbesondere 30 bis 50 Gew.-%, vorzugsweise 35 bis 45 Gew.-%, hergestellt wird und das zweite Copolymer aus mindestens a) 35 bis 65 Gew.-% Butylacrylat, insbesondere 40 bis 60 Gew.-%, vorzugsweise 45 bis 55 Gew.-%, und b) 35 - 65 Gew.-% Styrol, insbesondere 40 bis 60 Gew.-%, vorzugsweise 45 bis 55 Gew.-%, hergestellt wird.

15. Saatgutbeschichtung nach Anspruch 13 oder 14, **dadurch gekennzeichnet, dass** das Verhältnis von erstem zu zweitem Polymer im Bereich von 3:1 bis 1:3, vorzugsweise im Bereich von 2:1 bis 1:2, besonders bevorzugt im Bereich von 1,5:1 bis 1:1,5 und am meisten bevorzugt 1:1 liegt.

16. Saatgutbeschichtung nach einem oder mehreren der Ansprüche 13 bis 15, **dadurch gekennzeichnet, dass** das erste Copolymer ein gewichtsmittleres Molekulargewicht Mw im Bereich von 400.000 bis 800.000 g/mol, vorzugsweise 500.000 bis 700.000 g/mol, und besonders bevorzugt 550.000 - 650.000 g/mol hat und das zweite Copolymer ein gewichtsmittleres Molekulargewicht Mw im Bereich von 25.000 bis 125.000 g/mol, vorzugsweise 30.000 bis 100.000 g/mol, und besonders bevorzugt 40.000 - 80.000 g/mol hat.

17. Saatgutbeschichtung nach einem oder mehreren der Ansprüche 13 bis 16, **dadurch gekennzeichnet, dass** die Saatgutbeschichtung weiterhin ein Zinksalz oder ein Zinkoxid umfasst.

18. Saatgutbeschichtung nach einem oder mehreren der Ansprüche 13 bis 17, **dadurch gekennzeichnet, dass** die Saatgutbeschichtung weiterhin einen Farbstoff gegebenenfalls weitere Adjuvantien umfasst.

19. Saatgutbeschichtung nach einem oder mehreren der Ansprüche 13 bis 18, **dadurch gekennzeichnet, dass** die mindestens eine Agrochemikalie aus der Gruppe Penflufen, Isotianil, Chlorantraniliprol, Trifloxystrobin, Tetraniliprol und Ethiprol ausgewählt ist.

## Revendications

1. Procédé de préparation d'une graine de riz enrobée dans lequel un enrobage de graines est au moins partiellement appliqué à la surface d'une graine de riz sèche, **caractérisé en ce que** l'enrobage de graines comprend au moins un mélange d'un premier copolymère d'acrylate de butyle et de 1,4-dithénylbenzène et de styrène, et d'un deuxième copolymère d'acrylate de butyle et de styrène, et d'au moins un produit agrochimique.

2. Procédé selon la revendication 1, **caractérisé en ce que** le premier copolymère est préparé à partir d'au moins :
a. 45 à 65 % en poids d'acrylate de butyle, en particulier 50 à 70 % en poids, de préférence 55 à 65 % en poids ;
b. 35 à 55 % en poids de styrène et de 1,4-dithénylbenzène, en particulier 30 à 50 % en poids, de préférence 35 à 45 % en poids.

3. Procédé selon la revendication 2 ou 3, **caractérisé en ce que** le deuxième copolymère est préparé à partir d'au moins :
a. 35 à 65 % en poids d'acrylate de butyle, en particulier 40 à 60 % en poids, de préférence 45 à 55 % en poids ;
b. 35 à 65 % en poids de styrène, en particulier 40 à 60 % en poids, de préférence 45 à 55 % en poids.

4. Procédé selon l'une quelconque des revendications précédentes, **caractérisé en ce que** le rapport du premier au deuxième polymère est dans la plage de 3:1 à 1:3, de préférence dans la plage de 2:1 à 1:2, plus préférablement dans la plage de 1,5:1 à 1:1,5, et de manière préférée entre toutes 1:1.

5. Procédé selon l'une quelconque des revendications précédentes, **caractérisé en ce que** le premier copolymère a une masse moléculaire moyenne en poids Mw dans la plage de 400 000 à 800 000 g/mol, de préférence de 500 000 à 700 000 g/mol, et plus préférablement de 550 000 à 650 000 g/mol, et que le deuxième copolymère a une masse moléculaire moyenne en poids Mw dans la plage de 25 000 à 125 000 g/mol, de préférence de 30 000 à 100 000 g/mol, et plus préférablement de 40 000 à 80 000 g/mol.

6. Procédé selon l'une quelconque des revendications précédentes, **caractérisé en ce que** l'enrobage de graines comprend en outre un sel de zinc ou un oxyde de zinc.

7. Procédé selon l'une quelconque des revendications précédentes, **caractérisé en ce que** l'enrobage de graines comprend en outre un colorant.

8. Procédé selon l'une quelconque des revendications précédentes, **caractérisé en ce que** le copolymère est appliqué sur la graine sous la forme d'une dispersion, notamment sous la forme d'une dispersion aqueuse.

9. Procédé selon la revendication 8, **caractérisé en ce que** la dispersion est pratiquement exempte de plastifiants et/ou de détergents non ioniques, en particulier pratiquement exempte d'alkylphénol éthoxylé.

10. Procédé selon l'une quelconque des revendications précédentes, **caractérisé en ce que** le produit agrochimique est choisi dans le groupe comprenant des insecticides, des fongicides, des bactéricides, des virucides, des acaricides, des molluscicides, des nématicides, des ovicides, des répulsifs, des rodenticides, des herbicides, des phytoprotecteurs, des engrais, des produits biologiques ou des mélanges de ceux-ci.

11. Procédé selon l'une quelconque des revendications précédentes, **caractérisé en ce qu'**au moins un produit agrochimique est choisi parmi l'isotianil, le sédaxane, le penflufène, les antifongiques azolés, en particulier le tébuconazole, l'ipconazole, le propiconazole ou le difenconazole, les strobilurines, en particulier la trifloxystrobine, l'azoxystrobine ou la picoxystrobine, le penthiopyrade, le métalaxyl, le fludioxonil, le tiadinil, le fipronil, le flubendiamide, le chlorantraniliprole, le cyantraniliprole, l'imidaclopride, le thiaclopride, le thiaméthoxame, le clothianidine, le spinosad, l'éthiprole, le tétraniliprole ou des mélanges de ceux-ci, de préférence une combinaison de
a. isotianil et trifloxystrobine,
b. isotianil et penflufène ou
c. penflufène et trifloxystrobine.

12. Procédé selon l'une quelconque des revendications 1 à 11, **caractérisé en ce que** le copolymère et le produit agrochimique sont appliqués sur la graine de manière séquentielle, tandis que, de préférence, la graine est enrobée dans un premier temps avec au moins un produit agrochimique, puis avec le copolymère.

13. Enrobage de graines adapté pour enrober au moins partiellement une graine de riz avec un agent de traitement de graines de riz, **caractérisé en ce que** l'agent de traitement de graines de riz comprend un mélange d'un premier copolymère d'acrylate de butyle et de 1,4-dithénylbenzène et de styrène, et d'un deuxième copolymère d'acrylate de butyle et de styrène, et d'au moins un produit agrochimique.

14. Enrobage de graines selon la revendication 13, **caractérisé en ce que** le premier copolymère est préparé à partir de 45 à 65 % en poids d'acrylate de butyle, en particulier 50 à 70 % en poids, de préférence 55 à 65 % en poids ; et 35 à 55 % en poids de styrène et de 1,4-dithénylbenzène, en particulier 30 à 50 % en poids, de préférence 35 à 45 % en poids ; et le deuxième copolymère est préparé à partir d'au moins a) 35 à 65 % en poids d'acrylate de butyle, en particulier 40 à 60 % en poids, de préférence 45 à 55 % en poids ; et b) 35 à 65 % en poids de styrène, en particulier 40 à 60 % en poids, de préférence 45 à 55 % en poids.

15. Enrobage de graines selon la revendication 13 ou 14, **caractérisé en ce que** le rapport du premier au deuxième polymère est dans la plage de 3:1 à 1:3, de préférence dans la plage de 2:1 à 1:2, plus préférablement dans le plage de 1,5:1 à 1:1,5, et de manière préférée entre toutes 1:1.

16. Enrobage de graines selon l'une ou plusieurs des revendications 13 à 15, **caractérisé en ce que** le premier copolymère a une masse moléculaire moyenne en poids Mw dans la plage de 400 000 à 800 000 g/mol, de préférence de 500 000 à 700 000 g/mol, et plus préférablement de 550 000 à 650 000 g/mol ; et que le deuxième copolymère a une masse moléculaire moyenne en poids Mw dans la plage de 25 000 à 125 000 g/mol, de préférence de 30 000 à 100 000 g/mol, et plus préférablement de 40 000 à 80 000 g/mol.

17. Enrobage de graines selon l'une ou plusieurs des revendications 13 à 16, **caractérisé en ce que** l'enrobage de graines comprend en outre un sel de zinc ou un oxyde de zinc.

18. Enrobage de graines selon l'une ou plusieurs des revendications 13 à 17, **caractérisé en ce que** l'enrobage de graines comprend en outre un colorant et éventuellement d'autres adjuvants.

19. Enrobage de graines s selon l'une ou plusieurs des revendications 13 à 18, **caractérisé en ce que** l'au moins un produit agrochimique est choisi dans le groupe du penflufène, de l'isotianil, du chlorantraniliprole, de la trifloxystrobine, du tétraniliprole et de l'éthiprole.
